(19) Europäisches Patentamt
European Patent Office
Office européen des brevets

(11) **EP 4 668 920 A1**

(12) **EUROPEAN PATENT APPLICATION**
published in accordance with Art. 153(4) EPC

(43) Date of publication:
**24.12.2025 Bulletin 2025/52**

(21) Application number: **24757230.8**

(22) Date of filing: **16.02.2024**

(51) International Patent Classification (IPC):
*H04W 64/00* (2009.01)    *H04W 24/08* (2009.01)
*G01S 19/43* (2010.01)    *H04L 5/00* (2006.01)

(52) Cooperative Patent Classification (CPC):
**G01S 19/43; H04L 5/00; H04W 24/08; H04W 64/00**

(86) International application number:
**PCT/KR2024/002146**

(87) International publication number:
**WO 2024/172509 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023   KR 20230021059**

(71) Applicant: **LG Electronics Inc.**
**Yeongdeungpo-gu**
**Seoul 07336 (KR)**

(72) Inventors:
• **SHIM, Jaenam**
  **Seoul 06772 (KR)**
• **HWANG, Seunggye**
  **Seoul 06772 (KR)**
• **KO, Hyunsoo**
  **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD BY WHICH TERMINAL TRANSMITTS SIGNAL IN WIRELESS COMMUNICATION SYSTEM, AND APPARATUS FOR SAME**

(57)    Disclosed, according to various embodiments, are a method by which a terminal performs an operation for measuring the location thereof, and an apparatus for same. Disclosed are a method and an apparatus therefor, the method comprising the steps of: receiving sounding reference signal (SRS) configuration information; and transmitting an SRS on the basis of the SRS configuration information, wherein on the basis of the fact that the SRS configuration information includes information about a time domain window (TDW) for measuring the location of the terminal, the terminal repeatedly transmits the SRS while maintaining phase continuity within the TDW.

FIG. 14

S141 — Report capability information for time during which phase continuity may be maintained

S143 — Receive SRS configuration information from BS/network

S145 — Repeatedly transmit SRS based on SRS configuration information

**Description**

**TECHNICAL FIELD**

The present disclosure relates to a method and apparatus for transmitting a positioning-related signal by a user equipment (UE) in a wireless communication system.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**TECHNICAL PROBLEM**

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

**TECHNICAL SOLUTION**

According to an aspect, a method for performing a positioning operation by a user equipment (UE) in a wireless communication system may include receiving sounding reference signal (SRS) configuration information, and transmitting an SRS based on the SRS configuration information. Based on the SRS configuration information including information about a time domain window (TDW) for positioning of the UE, the UE may repeatedly transmit the SRS, while maintaining phase continuity within the TDW.

Alternatively, the SRS configuration information may include information about a plurality of time resources included in the TDW, and a repetition number for the SRS may be determined based on the number of consecutive time resources in a time domain among the plurality of time resources.

Alternatively, the SRS configuration information may further include information about a repetition number for the SRS.

Alternatively, a size of the TDW may be set based on capability information related to demodulation reference signal (DMRS) bundling, reported by the UE.

Alternatively, the method may further include reporting capability information for a maximum time during which the UE is capable of maintaining phase continuity, and a size of the TDW may be set to be less than or equal to the maximum time included in the capability information.

Alternatively, the capability information may be reported aperiodically based on mobility of the UE being changed.

Alternatively, based on the size of the TDW being greater than the maximum time, the UE may repeatedly transmit the SRS while maintaining phase continuity only during a time period corresponding to the maximum time.

Alternatively, the UE may stop the repeated transmission of the SRS based on occurrence of phase discontinuity within the TDW.

Alternatively, the SRS may be repeatedly transmitted within the TDW, for positioning of the UE through carrier phase measurement (CPM).

According to another aspect, a computer-readable recording medium having a program for performing the method for performing a positioning operation by a UE recorded thereon may be provided.

According to another aspect, a UE for performing the method for performing a positioning operation may be provided.

According to another aspect, a processing device for controlling the UE that performs a positioning operation may be provided.

According to another aspect, a method for performing an operation for positioning of a UE by a base station (BS) in a wireless communication system may include transmitting SRS configuration information to the UE, receiving an SRS from the UE based on the SRS configuration information, and positioning the UE by using a carrier phase calculated based on the received SRS. Based on the SRS configuration information including information about a time domain window (TDW) for positioning of the UE, the BS may repeatedly receive the SRS, while maintaining phase continuity within the TDW.

## ADVANTAGEOUS EFFECTS

According to an embodiment of the present disclosure, signal transmission and reception can be performed more accurately and efficiently in a wireless communication system.

The present disclosure is not limited to the technical effects described above, and other technical effects can be inferred from the detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system.
FIG. 2 illustrates the structure of an NR system.
FIG. 3 illustrates the structure of an NR radio frame.
FIG. 4 illustrates the slot structure of an NR frame.
FIG. 5 is a diagram illustrating physical channels and a signal transmission method using the physical channels, which may be used in the embodiment;
FIG. 6 is a flowchart showing an example of a UL BM procedure using a SRS.
FIG. 7 is a diagram illustrating a positioning protocol configuration for positioning a user equipment (UE), to which various embodiments are applicable.
FIG. 8 illustrates an exemplary system architecture for measuring positioning of a UE to which various embodiments are applicable.
FIG. 9 illustrates an implementation example of a network for UE positioning.
FIG. 10 is a diagram illustrating protocol layers for supporting LTE positioning protocol (LPP) message transmission, to which various embodiments are applicable.
FIG. 11 is a diagram illustrating protocol layers for supporting NR positioning protocol a (NRPPa) protocol data unit (PDU) transmission, to which various embodiments are applicable.
FIG. 12 is a diagram illustrating an observed time difference of arrival (OTDOA) positioning method, to which various embodiments are applicable.
FIG. 13 is a diagram illustrating various scenarios related to wireless sensing through ISAC/JCAS.
FIG. 14 is a diagram illustrating a method for transmitting a positioning-related SRS by a UE.
FIG. 15 is a diagram illustrating a method for receiving a positioning-related SRS by a BS/network.
FIG. 16 illustrates a communication system applied to the present disclosure;
FIG. 17 illustrates wireless devices applicable to the present disclosure.
FIG. 18 illustrates another example of a wireless device to which the present disclosure is applied.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA).

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

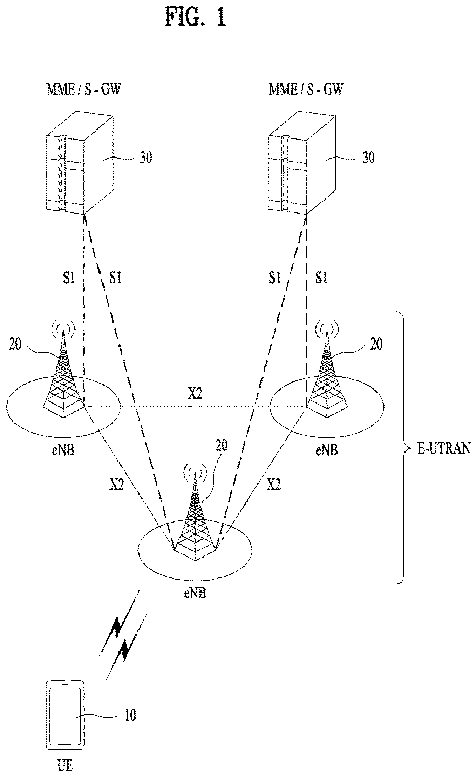

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

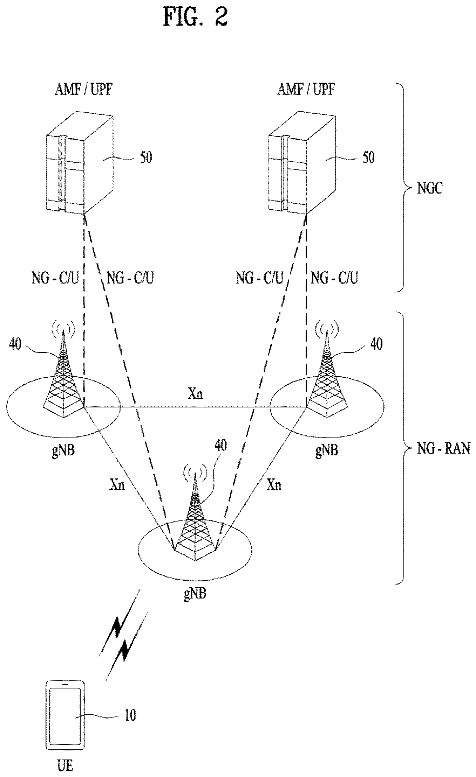

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

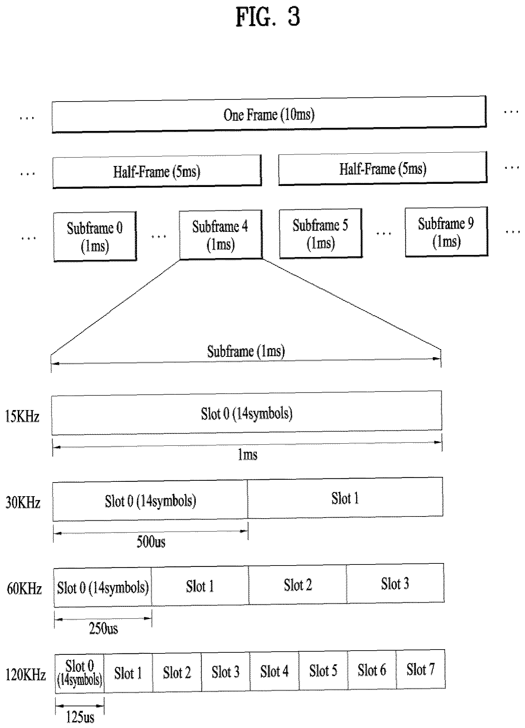

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2$^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2$^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

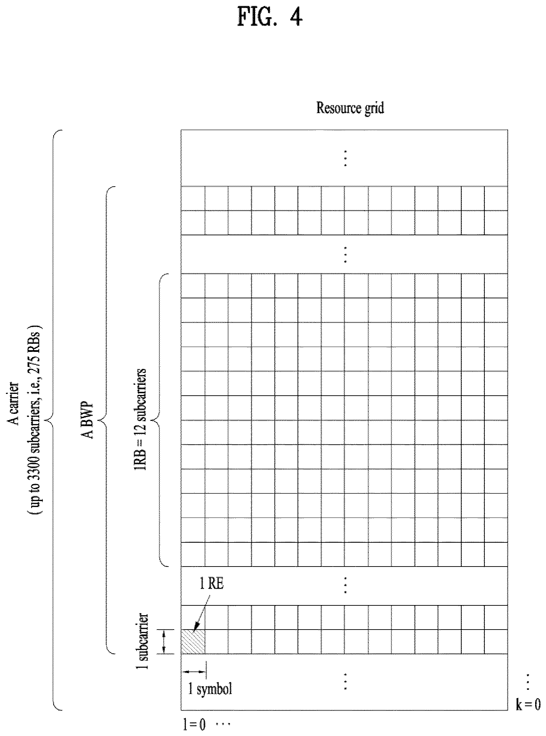

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

**Bandwidth part (BWP)**

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) consecutive on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

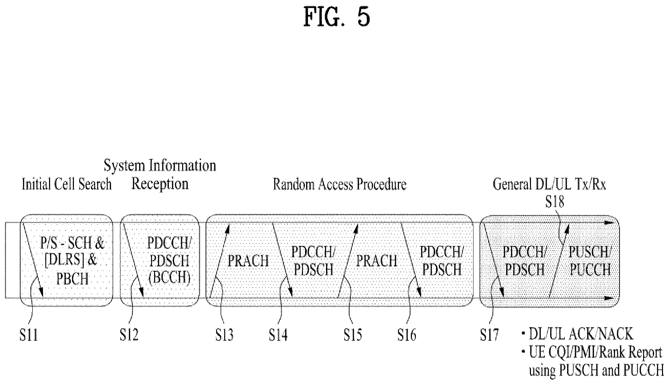

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### Sounding Procedure

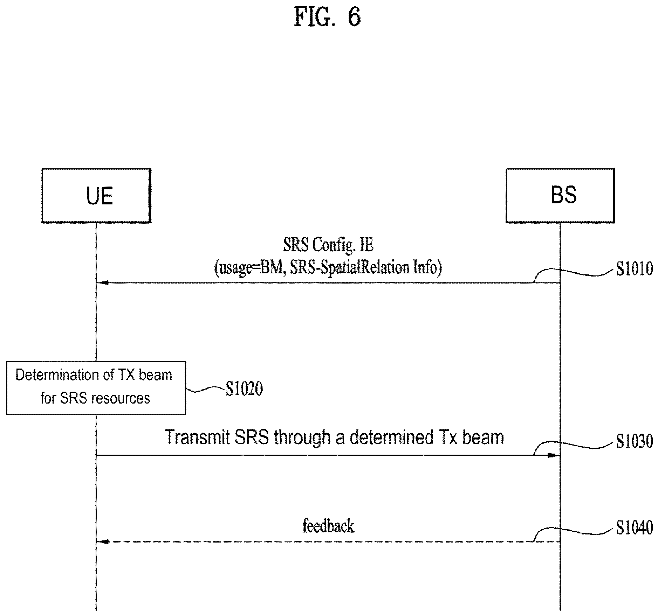

FIG. 6 is a flowchart showing an example of a UL BM procedure using a SRS.

Referring to FIG. 6, in UL BM, beam reciprocity (or beam correspondence) between a Tx beam and a Rx beam may or may not be established according to UE implementation. When reciprocity between the Tx beam and the Rx beam is established in both the BS and the UE, a UL beam pair may be aligned through a DL beam pair. However, when reciprocity between the Tx beam and the Rx beam is not established in either of the BS and the UE, a UL beam pair determination process may be required separately from DL beam pair determination.

The UE may receive RRC signaling (e.g., SRS-Config IE) including a (higher layer parameter) usage parameter configured to 'beam management' (S1010).

The UE may determine the Tx beam for a SRS resource to be transmitted based on SRS-SpatialRelation Info included in the SRS-Config IE (S1020). Here, the SRS-SpatialRelation Info may be configured for each SRS resource, and may indicate whether to apply the same beam as the beam used in SSB, CSI-RS, or SRS for each SRS resource. In addition, SRS-SpatialRelationInfo may or may not be configured in each SRS resource. When the SRS-SpatialRelationInfo is configured in the SRS resource, the same beam as the beam used in SSB, CSI-RS or SRS may be applied and transmitted. However, when SRS-SpatialRelationInfo is not configured to the SRS resource, the UE may arbitrarily determine a Tx beam and may transmit the SRS through the determined Tx beam (S1030).

In more detail, for P-SRS in which 'SRS-ResourceConfigType' is configured 'periodically':

i) When the SRS-SpatialRelationInfo is configured to 'SSB/PBCH', the UE may apply the same spatial domain transmission filter (or generated from the corresponding filter) as a spatial domain Rx filter used to receive a SSB/PBCH and may transmit the corresponding SRS resource; or

ii) When the SRS-SpatialRelationInfo is configured to a 'CSI-RS', the UE may apply the same spatial domain transmission filter as a filter used to receive a periodic CSI-RS or a SP CSI-RS and may transmit a SRS resource; or

iii) When the SRS-SpatialRelationInfo is configured to a 'SRS', the UE may apply the same spatial domain transmission filter as a filter used to transmit a periodic SRS and may transmit the corresponding SRS resource.

Even when the 'SRS-ResourceConfigType' is configured to a 'SP-SRS' or an 'AP-SRS', beam determination and transmission operations may be applied similar to the above.

- Additionally, the UE may or may not receive feedback to the SRS from the BS as in the following three cases (S1040)

i) When Spatial_Relation_Info is configured for all SRS resources in an SRS resource set, the UE may transmit an SRS in a beam indicated by the BS. For example, when Spatial_Relation_Info all indicate the same SSB, CRI, or SRI, the UE may repeatedly transmit the SRS in the same beam.

ii) Spatial_Relation_Info may not be configured for all SRS resources in the SRS resource set. In this case, the UE may freely perform transmission while changing the SRS beam.

iii) Spatial_Relation_Info may be configured only for some SRS resources in the SRS resource set. In this case, for the configured SRS resource, the SRS may be transmitted in the indicated beam, and for the SRS resource for which Spatial_Relation_Info is not configured, the UE may arbitrarily apply the Tx beam to perform transmission.

A DCI format 0_0 or 0_1 may be used for uplink scheduling, and in particular, the DCI format 0_1 may include the following information:

- Identifier for DCI formats, UL/SUL(supplementary uplink) indicator (UL/SUL indicator), Bandwidth part indicator, Frequency domain resource assignment, Time domain resource assignment, Frequency hopping flag, MCS (Modulation and coding scheme), SRI (SRS resource indicator), Precoding information and number of layers, Antenna port(s), SRS request), DMRS sequence initialization, and UL-SCH (Uplink Shared Channel) indicator (UL-SCH indicator).

- In particular, SRS resources configured in an SRS resource set related to the higher layer parameter 'usage' may be indicated by an SRS resource indicator field. In addition, 'spatialRelationInfo' may be configured for each SRS resource, and the value may be one of {CRI, SSB, and SRI}.

When detecting a PDCCH including the DCI format 0_0 or 0_1, the UE may transmit the corresponding PUSCH according to indication by the corresponding DCI.

Two transmission schemes of codebook-based transmission and non-codebook-based transmission are supported for PUSCH transmission:

i) When the higher layer parameter 'txConfig' is set to the 'codebook', the UE is configured with codebook-based transmission. On the other hand, when the higher layer parameter 'txConfig' is set to the 'nonCodebook', the UE is configured with non-codebook based transmission. When the higher layer parameter 'txConfig' is not set, the UE may not expect to be scheduled by the DCI format 0_1. When the PUSCH is scheduled according to the DCI format 0_0, PUSCH transmission may be based on a single antenna port.

In the case of codebook-based transmission, the PUSCH may be scheduled by DCI format 0_0, DCI format 0_1, or semi-statically. When the PUSCH is scheduled by the DCI format 0_1, the UE may determine a PUSCH transmission precoder based on SRI, TPMI (Transmit Precoding Matrix Indicator), and transmission rank from DCI, as given by an SRS resource indicator field, Precoding information, and number of layers field. The TPMI may be used to indicate a precoder to be applied across an antenna port, and may correspond to an SRS resource selected by the SRI when multiple SRS resources are configured. Alternatively, when a single SRS resource is configured, the TPMI may be used to indicate a precoder to be applied across the antenna port, and may correspond to the single SRS resource. A transmission precoder may be selected from an uplink codebook having the same number of antenna ports as the higher layer parameter 'nrofSRS-Ports'. When a higher layer in which the UE is set to the 'codebook' is configured with the parameter 'txConfig', the UE may be configured with at least one SRS resource. The SRI indicated in slot n may be related to the most recent transmission of the SRS resource identified by the SRI, and here, the SRS resource may precede the PDCCH carrying the SRI (i.e., slot n).

ii) In the case of non-codebook-based transmission, the PUSCH may be scheduled by DCI format 0_0, DCI format 0_1, or semi-statically. When multiple SRS resources are configured, the UE may determine a PUSCH precoder and a transmission rank based on a wideband SRI, and here, the SRI may be given by an SRS resource indicator in the DCI or by a higher layer parameter 'srs-ResourceIndicator'. The UE may use one or multiple SRS resources for SRS transmission, and here, the number of SRS resources may be configured for simultaneous transmission within the same RB based on UE capabilities. Only one SRS port may be configured for each SRS resource. Only one SRS resource may be configured to the higher layer parameter 'usage' set to the 'nonCodebook'. The maximum number of SRS resources to be configured for non-codebook-based uplink transmission may be 4. The SRI indicated in slot n may be related to the most recent transmission of the SRS resource identified by the SRI, and here, SRS transmission may precede the PDCCH carrying the SRI (i.e., slot n).

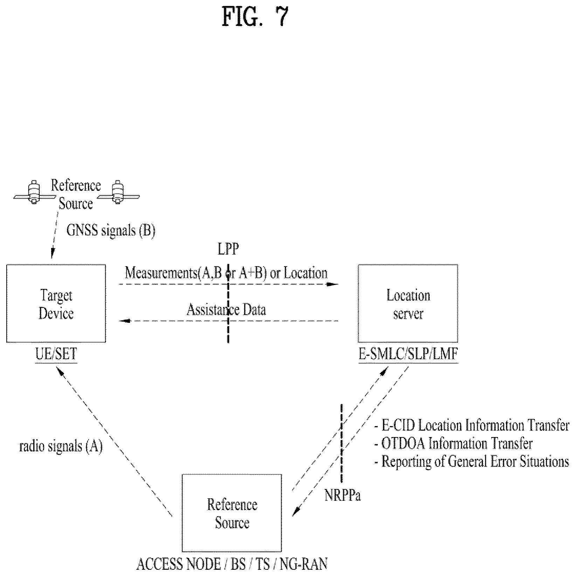

FIG. 7 is a diagram illustrating an exemplary positioning protocol configuration for positioning a UE, to which the embodiment is applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ ($m$ = 0, 1, ...) may be defined by Equation 1.

[Equation 1]

$$r(m) = \tfrac{1}{\sqrt{2}}\big(1 - 2c(m)\big) + j\tfrac{1}{\sqrt{2}}\big(1 - 2c(m+1)\big)$$

In Equation 1, c(i) may be a pseudo-random sequence. A pseudo-random sequence generator may be initialized by Equation 2.

[Equation 2]

$$c_{\text{init}} = \left( 2^{22} \left\lfloor \frac{n_{\text{ID,seq}}^{\text{PRS}}}{1024} \right\rfloor + 2^{10}\big(N_{\text{symb}}^{\text{slot}} n_{\text{s,f}}^{\mu} + l + 1\big)\big(2\big(n_{\text{ID,seq}}^{\text{PRS}} \bmod 1024\big) + 1\big) \right.$$

$$\left. + \big(n_{\text{ID,seq}}^{\text{PRS}} \bmod 1024\big) \right) \bmod 2^{31}$$

$n_{\text{s,f}}^{\mu}$ may be a slot number in a frame in an SCS configuration $\mu$. A DL PRS sequence ID $n_{\text{ID,seq}}^{\text{PRS}} \in \{0,1,\dots,4095\}$ may be given by a higher-layer parameter (e.g., DL-PRS-SequenceId). 1 may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k, l)_{p,\mu}$, specifically by Equation 3. $(k, l)_{p,\mu}$ may represent an RE $(k, l)$ for an antenna port p and the SCS configuration $\mu$.

[Equation 3]

$$a_{k,l}^{(p,\mu)} = \beta_{\text{PRS}}\, r(m)$$

$$m = 0, 1, \dots$$

$$k = mK_{\text{comb}}^{\text{PRS}} + \big(\big(k_{\text{offset}}^{\text{PRS}} + k'\big) \bmod K_{\text{comb}}^{\text{PRS}}\big)$$

$$l = l_{\text{start}}^{\text{PRS}}, l_{\text{start}}^{\text{PRS}} + 1, \dots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;

- The symbol 1 not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2,4,6,12\}$ may be given by a higher-layer parameter DL-PRS-NumSymbols. A comb size $K_{\text{comb}}^{\text{PRS}} \in \{2,4,6,12\}$ may be given by a higher-layer parameter transmissionComb. A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, {4, 2}, {6, 2}, {12, 2}, {4, 4}, {12, 4}, {6, 6}, {12, 6} and/or {12, 12}. An RE offset $k_{\text{offset}}^{\text{PRS}} \in \{0,1,\dots,K_{\text{comb}}^{\text{PRS}} - 1\}$ may be given by comboffset. A frequency offset $k'$ may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{i T_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration μ. $n_{\text{f}}$ may be a system frame number (SFN). $n_{\text{s,f}}^{\mu}$ may be a slot number in a frame in the SCS configuration μ. A slot offset $T_{\text{offset}}^{\text{PRS}} \in \{0,1,\dots,T_{\text{per}}^{\text{PRS}} - 1\}$ may be given by a higher-layer parameter *DL-PRS-ResourceSetSlotOffset.* A DL PRS resource slot offset $T_{\text{offset,res}}^{\text{PRS}}$ may be given by a higher layer parameter *DL-PRS-ResourceSlotOffset.* A periodicity $T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity.* A repetition factor $T_{\text{rep}}^{\text{PRS}} \in \{1,2,4,6,8,16,32\}$ may be given by a higher-layer parameter DL-PRS-ResourceRepetitionFactor. A muting repetition factor $T_{\text{muting}}^{\text{PRS}}$ may be given by a higher-layer parameter *DL-PRS-MutingBitRepetitionFactor.* A time gap $T_{\text{gap}}^{\text{PRS}} \in \{1,2,4,8,16,32\}$ may be given by a higher-layer parameter *DL-PRS-ResourceTimeGap.*

The PRS reception procedure of a terminal in an NR system to which various embodiments of the present disclosure are applicable may be based on Table 6 below.

[Table 6]

5.1.6.5 PRS reception procedure

The UE can be configured with one or more DL PRS resource set configuration(s) as indicated by the higher layer parameters DL-PRS-ResourceSet and DL-PRS-Resource. Each DL PRS resource set consists of K≥1 DL PRS resource(s) where each has an associated spatial transmission filter. The UE can be configured with one or more DL PRS Positioning Frequency Layer configuration(s) as indicated by the higher layer parameter DL-PRS-Positioning-FrequencyLayer. A DL PRS Positioning Frequency Layer is defined as a collection of DL PRS Resource Sets which have common parameters configured by DL-PRS-PositioningFrequencyLayer.

The UE assumes that the following parameters for each DL PRS resource(s) are configured via higher layer parameters DL-PRS-PositioningFrequencyLayer, DL-PRS-ResourceSet and DL-PRS-Resource.

A positioning frequency layer consists of one or more PRS resource sets and it is defined by:

- DL-PRS-SubcarrierSpacing defines the subcarrier spacing for the DL PRS resource. All DL PRS Resources and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211].

- DL-PRS-CyclicPrefix defines the cyclic prefix for the DL PRS resource. All DL PRS Resources and DL PRS Resource sets in the same DL-PRS-PositioningFrequencyLayer have the same value of DL-PRS-CyclicPrefix. The supported values of DL-PRS-CyclicPrefix are given in Table 4.2-1 of [4, TS38.211].

- DL-PRS-PointA defines the absolute frequency of the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A.

The UE expects that it will be configured with [IDs] each of which is defined such that it is associated with multiple DL PRS Resource Sets from the same cell. The UE expects that one of these [IDs] along with a DL-PRS-ResourceSetId and a DL-PRS-ResourceId can be used to uniquely identify a DL PRS Resource.

---

A PRS resource set consists of one or more PRS resources and it is defined by:

- DL-PRS-ResourceSetId defines the identity of the DL PRS resource set configuration.

- DL-PRS-Periodicity defines the DL PRS resource periodicity and takes values $T_{\text{per}}^{\text{PRS}} \in$

$$2^{\mu}\{4, 8, 16, 32, 64, 5, 10, 20, 40, 80, 160, 320, 640, 1280, 2560, 5120, 10240, 20480\}$$

slots, where $\mu$ = 0, 1, 2, 3 for DL-PRS-SubcarrierSpacing=15, 30, 60 and 120kHz respectively.

$T_{\text{per}}^{\text{PRS}} = 2^{\mu} \cdot 20480$ is not supported for $\mu$ = 0. All the DL PRS resources within one resource set are configured with the same periodicity.

- DL-PRS-ResourceRepetitionFactor defines how many times each DL-PRS resource is repeated for a single instance of the DL-PRS resource set and takes values $T_{\text{rep}}^{\text{PRS}} \in \{1,2,4,6,8,16,32\}$ ,. All the DL PRS resources within one resource set have the same ResourceRepetitionFactor

- DL-PRS-ResourceTimeGap defines the offset in number of slots between two repeated instances of a DL PRS resource with the same DL-PRS-ResourceID within a single instance of the DL PRS resource set and takes values $T_{\text{gap}}^{\text{PRS}} \in \{1,2,4,8,16,32\}$ . The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap.

(continued)

- DL-PRS-MutingPattern defines a bitmap of the time locations where the DL PRS resource is expected to not be transmitted for a DL PRS resource set. The bitmap size can be {2, 4, 8, 16, 32} bits long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211].

in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty. The UE expects the reference time to be indicated whenever it is expected to receive the DL PRS. This reference time provided by DL-PRS-RstdReferenceInfo may include an [ID], a PRS resource set ID, and optionally a single PRS resource ID or a list of PRS resource IDs. The UE may use different DL PRS resources or a different DL PRS resource set to determine the reference time for the RSTD measurement as long as the condition that the DL PRS resources used belong to a single DL PRS resource set is met. If the UE chooses to use a different reference time than indicated by the network, then it is expected to report the DL PRS resource ID(s) or the DL PRS resource set ID used to determine the reference. The UE may be configured to report quality metrics corresponding to the RSTD and UE Rx-Tx time difference measurements which include the following fields:

- TimingMeasQuality-Value which provides the best estimate of the uncertainty of the measurement
- TimingMeasQuality-Resolution which specifies the resolution levels used in the Value field

The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expectedRSTD.

For DL UE positioning measurement reporting in higher layer parameters DL-PRS-RstdMeasurementInfo or DL-PRS-UE-Rx-Tx-MeasurementInfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP. The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers.

For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo.

The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ].

The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell. The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing.

(continued)

| The UE may be configured to measure and report up to 8 DL PRS RSRP measurements on different DL PRS resources from the same cell. When the UE reports DL PRS RSRP measurements from one DL PRS resource set, the UE may indicate which DL PRS RSRP measurements have been performed using the same spatial domain filter for reception. If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-ResrouceId of the source DL-PRS-Resource are expected to be indicated to the UE. |
| The UE does not expect to process the DL PRS in the same symbol where other DL signals and channels are transmitted to the UE when there is no measurement gap configured to the UE. |

## UE Positioning Architecture

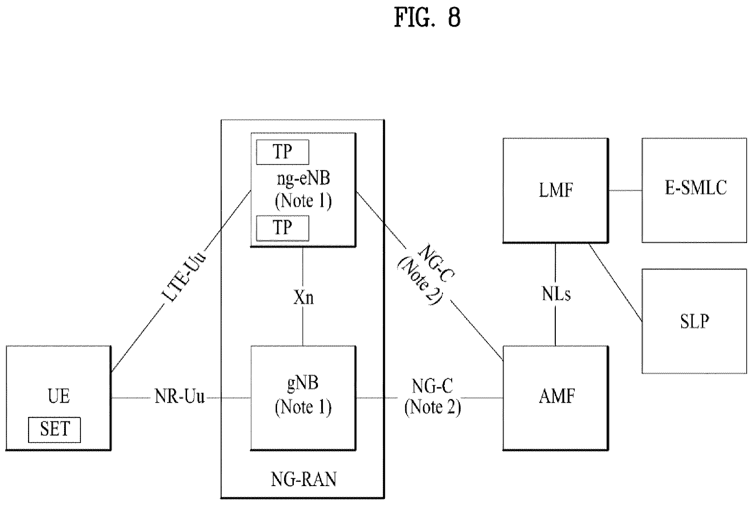

FIG. 8 illustrates an exemplary system architecture for measuring positioning of a UE to which the embodiment is applicable.

Referring to FIG. 8, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

## Operation for UE Positioning

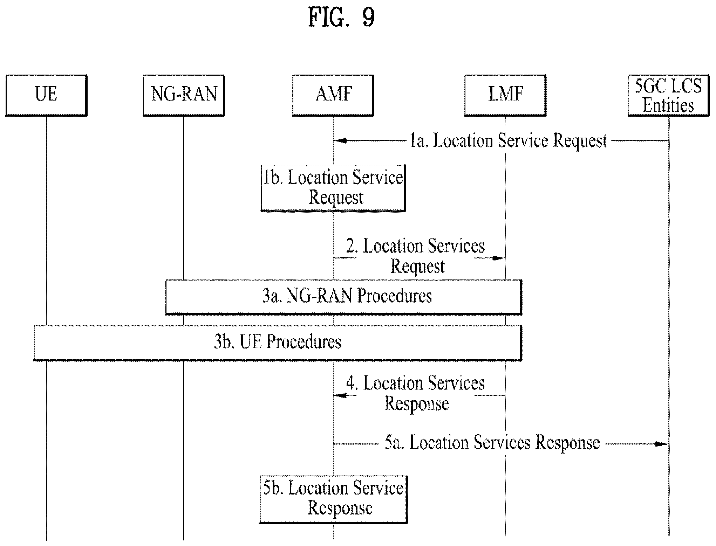

FIG. 9 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 9. In other words, in FIG. 9 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 9. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 9 has been initiated by step 1a, the AMF may transfer the location service response to a 5GC entity such as a GMLC. If the procedure of FIG. 9 has been initiated by step 1b, the AMF may use the location service response in order to provide a location service related to an emergency call.

**LTE Positioning Protocol (LPP)**

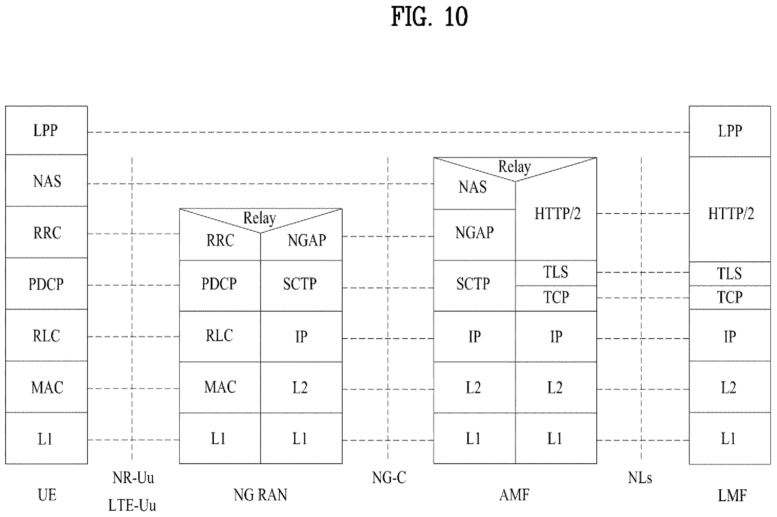

FIG. 10 illustrates an exemplary protocol layer used to support LPP message transfer between an LMF and a UE. An LPP protocol data unit (PDU) may be carried in a NAS PDU between an AMF and the UE.

Referring to FIG. 10, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

FIG. 101 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

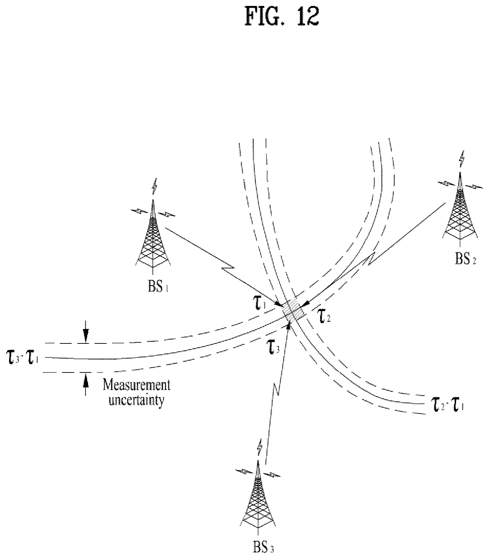

FIG. 12 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$T_{ADV}$ Type 1 = (ng-eNB Rx-Tx time difference)+(UE E-UTRA Rx-Tx time difference)

TADV Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

**UE sounding procedure for positioning purposes**

An SRS configuration such as SRS resources configured in FIG. 6 described above may also be configured for positioning, as illustrated in Table 7 (refer to TS 38.214 6.2.1.4).

[Table 7]

When the SRS is configured by the higher layer parameter SRS-PosResource and if the higher layer parameter spatialRelationInfoPos is configured, it contains the ID of the configuration fields of a reference RS according to Clause 6.3.2 of [TS 38.331]. The reference RS can be an SRS configured by the higher layer parameter SRS-Resource or SRS-PosResource, CSI-RS, SS/PBCH block, or a DL PRS configured on a serving cell or a SS/PBCH block or a DL PRS configured on a non-serving cell. If the UE is configured for transmission of SRS-PosResource in RRC_INACTIVE mode, the configured spatialRelationInfoPos is also applicable.

The UE is not expected to transmit multiple SRS resources with different spatial relations in the same OFDM symbol.

If the UE is not configured with the higher layer parameter spatialRelationInfoPos the UE may use a fixed spatial domain transmission filter for transmissions of the SRS configured by the higher layer parameter SRS-PosResource across multiple SRS resources or it may use a different spatial domain transmission filter across multiple SRS resources.

In RRC_CONNECTED mode, the UE is only expected to transmit an SRS configured by the higher layer parameter SRS-PosResource within the active UL BWP of the UE. When the configuration of SRS is done by the higher layer parameter SRS-PosResource, the UE can only be provided with a single RS source in spatialRelationInfoPos per SRS resource for positioning.

For operation on the same carrier, if an SRS configured by the higher parameter SRS-PosResource collides with a scheduled PUSCH, the SRS is dropped in the symbols where the collision occurs.

Subject to UE capability, the UE may be configured with an SRS resource for positioning associated with the initial UL BWP, and the SRS resource is transmitted inside the initial UL BWP during RRC_INACTIVE mode with the same CP and subcarrier spacing as configured for the initial UL BWP. Subject to UE capability, the UE may be configured with an SRS resource for positioning outside the initial BWP including frequency location and bandwidth, subcarrier spacing, and CP length for transmission of the SRS in RRC_INACTIVE mode. If the transmission of SRS for positioning outside the initial BWP in RRC_INACTIVE mode along with the switching time, indicated in higher layer parameter switchingTimeSRS-TX-OtherTX, in unpaired spectrum, subject to UE capability, collides in time domain with other DL signals or channels or UL signals or channels, the SRS for positioning transmission is dropped in the symbol(s) where the collision occurs. If the transmission of SRS for positioning outside the initial BWP in RRC_INACTIVE mode along with the switching time, indicated in higher layer parameter switchingTimeSRS-TX-OtherTX, in paired spectrum or SUL band, subject to UE capability, collides in time domain with UL signals or channels on the same carrier, the SRS for positioning transmission is dropped in the symbol(s) where the collision occurs. The SRS resource for positioning outside the initial BWP in RRC_INACTIVE mode is configured in the same band and CC as the initial UL BWP. If the UE in RRC_INACTIVE mode determines that the UE is not able to accurately measure the configured DL RS in SRS-SpatialRelationInfoPos for a SRS resource for positioning where the DL RS is semi-persistent or periodic, the UE stops transmission of the SRS resource for positioning.

The UE is not expected to simultaneously transmit SRS resources.

For an SRS for positioning, SRS resources may be configured as illustrated in Table 8 (refer to TS 38.211 6.4.1.4), similar to the SRS defined in FIG. 6.

[Table 8]

6.4.1.4 Sounding reference signal

6.4.1.4.1 SRS resource

An SRS resource is configured by the *SRS-Resource* IE or the *SRS-PosResource* IE and consists of

- $N_{ap}^{SRS} \in \{1,2,4\}$ antenna ports $\{p_i\}_{i=0}^{N_{ap}^{SRS}-1}$, where the number of antenna ports is given by the higher layer parameter *nrofSRS-Ports* if configured, otherwise $N_{ap}^{SRS} = 1$, and $p_i$ = 1000 + $i$ when the SRS resource is in a SRS resource set with higher-layer parameter *usage* in *SRS-ResourceSet* not set to 'nonCodebook', or determined according to [6, TS 38.214] when the SRS resource is in a SRS resource set with higher-layer parameter *usage* in *SRS-ResourceSet* set to 'nonCodebook'

- $N_{symb}^{SRS} \in \{1,2,4,8,10,12,14\}$ consecutive OFDM symbols given by the field *nrofSymbols* contained in the higher layer parameter *resourceMapping/*

(continued)

- $l_0$, the starting position in the time domain given by $l_0 = N_{\text{symb}}^{\text{slot}} - 1 - l_{\text{offset}}$ where the offset $l_{\text{offset}} \in \{0,1, ...,13\}$ counts symbols backwards from the end of the slot and is given by the field *startPosition* contained in the higher layer parameter *resourceMapping* and $l_{\text{offset}} \geq N_{\text{symb}}^{\text{SRS}} - 1$

- $k_0$, the frequency-domain starting position of the sounding reference signal

6.4.1.4.2 Sequence generation

The sounding reference signal sequence for an SRS resource shall be generated according to

$$r^{(p_i)}(n, l') = r_{u,v}^{(\alpha_i, \delta)}(n)$$

$$0 \leq n \leq M_{\text{sc},b}^{\text{SRS}} - 1$$

$$l' \in \left\{0,1, ..., N_{\text{symb}}^{\text{SRS}} - 1\right\}$$

where $M_{\text{sc},b}^{\text{SRS}}$ is given by clause 6.4.1.4.3, $r_{u,v}^{(\alpha,\delta)}(n)$ is given by clause 5.2.2 with $\delta = \log_2(K_{\text{TC}})$ and the transmission comb number $K_{\text{TC}} \in \{2,4,8\}$ is contained in the higher-layer parameter *transmissionComb*. The cyclic shift $\alpha_i$ for antenna port $p_i$ is given as

$$\alpha_i = 2\pi \frac{n_{\text{SRS}}^{\text{cs},i}}{n_{\text{SRS}}^{\text{cs,max}}}$$

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}}(p_i - 1000)}{N_{\text{ap}}^{\text{SRS}}}\right) \bmod n_{\text{SRS}}^{\text{cs,max}} & \text{otherwise} \end{cases},$$

In addition, the SRS for positioning may also be triggered/scheduled by an SRS request included in DCI (Format 0_1; refer to TS 38.212 7.3.1.1.2), as described in FIG. 6.

## ISAC and JCAS

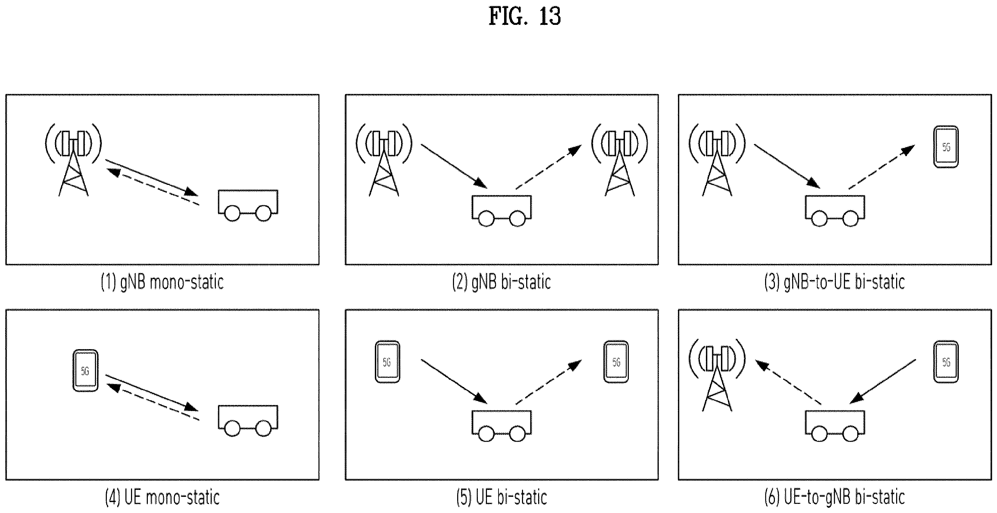

FIG. 13 is a diagram illustrating various scenarios related to wireless sensing through ISAC/JCAS.

Recently, various methods for using wireless sensing in a wireless communication system have been discussed. Generally, existing radar technology may be considered for wireless sensing purposes. However, the radar technology has limitations in that it is specialized for sensing with no regard to communication characteristics, and a transmission/-reception node requires a separate device for transmitting/receiving a signal for wireless sensing. To address these issues, methods (e.g., integrated sensing and communication (ISAC) or joint communication and sensing (JCAS)) for using wireless sensing in a wireless communication system supporting communication over a cellular network, such as 5G and/or next-generation 6G, are under active study.

In the 3GPP standardization, a study for supporting ISAC in 5G/6G has begun. According to TR 22.837 published by the 3GPP SA1 WG, wireless sensing is defined as a technology for acquiring information about environmental characteristics and/or surrounding objects, using radio waves to measure a distance, an angle, or an instantaneous velocity. In this context, a scenario where the same frequency band and hardware are shared for sensing and communication is under consideration. A method for sharing/reusing radio waves for communication as radio waves for sensing (e.g., using a reference signal for communication, like SSB, DMRS, CSI-RS, and/or SRS), or separately designing radio waves for wireless sensing may also be considered.

Generally, it may be considered that wireless sensing supported by ISAC is performed in a process of receiving a signal transmitted from a transmitter and then reflected from a target object by a receiver, and sensing modes may be defined for scenarios distinguished by relationships between the transmitter and the receiver. Based on whether the transmitter and the receiver are the same, a mono-static sensing mode may be defined for the case where the transmitter and the receiver are identical, and a bi-static sensing mode may be defined for the case where the transmitter and the receiver are different. Considering a transmission/reception operation and nodes participating in the transmission/reception operation in the 3GPP standards, six sensing modes may typically be defined, as illustrated in FIG. 13.

(1) BS mono-static sensing mode: The BS that transmits a radio wave receives a reflected signal.
(2) BS -to- BS bi-static sensing mode: Another BS receives a reflected signal of a radio wave transmitted by a specific BS.

(3) BS -to- UE bi-static sensing mode: The UE receives a reflected signal of a radio wave transmitted by the BS.

(4) BS mono-static sensing mode: The UE that transmits a radio wave receives a reflected signal.

(5) UE -to- UE bi-static sensing mode: Another UE receives a reflected signal of a radio wave transmitted by a specific transmitting UE.

(6) UE -to- BS bi-static sensing mode: The BS receives a reflected signal of a radio wave transmitted by a transmitting UE.

However, in addition to the six use cases described above, a sensing mode that includes multiple transmitting/receiving nodes may be referred to using the term multi-static sensing mode.

Wireless sensing through ISAC/JCAS is considered for application in various scenarios. In general, wireless sensing is considered to have the purpose of obtaining information about a target without a communication module (or independent of a communication module), and scenarios to be considered as an example may be broadly divided into three scenarios.

(1) Object detection and tracking: As a scenario for sensing a target object or person or tracking location information, typical considerations may include intruder sensing in indoor/outdoor situations, UAV or AGV location tracking, and autonomous driving support scenarios.

(2) Environment monitoring: As a scenario for collecting information about an environment around transmitting/receiving nodes, typical considerations may include rainfall information observation and flood sensing scenarios.

(3) Motion monitoring: As a scenario for sensing movement of an object, typical considerations may include scenarios for distinguishing human movements or gestures.

The performance measures and levels required for each of the above scenarios may be diverse and may be different from each other. To design ISAC/JCAS suitable for service quality required in each scenario, various key performance requirements need to be considered. The TS 22.137 document of the 3GPP standard defines positioning estimation accuracy, speed estimation accuracy, confidence level, sensing resolution, missed detection probability, false alarm probability, maximum delay of sensing service, and refreshing rate as the key performance requirements for the performance required in each service scenario, and a level required for each key performance requirement may vary depending on service scenario.

### CPM (Carrier Phase Measurement)

Carrier phase measurement (CPM) is one of the position estimation algorithms used in the GPS/GNSS. In brief, the CPM is a scheme of estimating the distance between a transmitter and receiver by measuring the phase of a received transmission signal and determining the position based on the estimated distance. In other words, the position of the user may be measured by calculating the distance to each of the multiple satellites based on signals received from the multiple satellites. In this case, it is assumed that there is a Line of Sight (LoS) between the satellite and the user, and based on this assumption, the time difference between the transmitter and receiver may be translated into the distance between the transmitter and receiver. Meanwhile, satellite channels may experience multi-path and delays due to the ionosphere, but the multi-path and delays caused by the ionosphere may be mitigated through modeling.

Table 9 below shows the matters discussed in relation to (3GPP) CPM in a specific scenario.

[Table 9]

| **Justification** |
|---|
| Regarding higher accuracy, two promising techniques identified in earlier studies will be considered in Rel-18: one is to take the advantage of the rich 5G spectrum to increase the bandwidth for the transmission and reception of the positioning reference signals based on PRS/SRS bandwidth aggregation for intra-band carriers, and the other is to use the NR carrier phase measurements. GNSS carrier phase positioning has been used very successfully for centimetre-level positioning but is limited to outdoor applications. NR carrier phase positioning has the potential for significant performance improvements for indoor and outdoor deployments in comparison with the existing NR positioning methods, as well as shorter latency and lower UE power consumption in comparison with RTK-GNSS outdoors. |
| **Objective** |
| • Improved accuracy, integrity, and power efficiency:<br> o Study solutions for Integrity for RAT dependent positioning techniques [RAN2, RAN1]:<br> ▪ Identify the error sources, [RAN1, RAN2]. |

(continued)

| |
|---|
| ■ Study methodologies, procedures, signalling, etc for determination of positioning integrity for both UE-based and UE-assisted positioning [RAN2]<br>■ Focus on reuse of concepts and principles being developed for RAT-Independent GNSS positioning integrity, where possible.<br>o Study solutions for accuracy improvement based on PRS/SRS bandwidth aggregation for intra-band carriers considering e.g. timing errors, phase coherency, frequency errors, power imbalance, etc [RAN4]:<br>o Study solutions for accuracy improvement based on NR carrier phase measurements [RAN1, RAN4]<br>■ Reference signals, physical layer measurements, physical layer procedures to enable positioning based on NR carrier phase measurements for both UE-based and UE-assisted positioning [RAN1]<br>■ Focus on reuse of existing PRS and SRS, with new reference signals only considered if found necessary<br>o Study the requirements on LPHAP as developed by SA1 and evaluate whether existing RAN functionality can support these power consumption and positioning requirements. Based on the evaluation, and, if found beneficial, study potential enhancements to help address any limitations [RAN2, RAN1]<br>■ Study is limited to a single representati LPHAP<br>■ ve use case (use case 6 as defined TS 22.104). The choice of selected use case can be reviewed at the start of the study.<br>Study is limited to enhancements to RRC_INACTIVE and/or RRC_IDLE state |

The aforementioned CPM may be compared to code phase measurement. While the code phase measurement is commonly used, in GPS/GNSS-related positioning, the actual phase of a carrier may be directly measured. Typically, the CPM provides higher accuracy than the code phase measurement because the CPM directly measures the phase within a cycle corresponding to the carrier frequency. Meanwhile, the CPM and code phase measurement may be performed based on similar or identical algorithms or methods.

In the CPM, the following fundamental positioning principle may be used: the transmitter transmits a predetermined signal at a specific time, and the receiver measures the exact reception time at the carrier phase level (i.e., within the cycle of the carrier frequency). In this case, the distance between the transmitter and receiver may be measured very accurately based on the CPM. To use such a method, the distance is typically converted into a phase, and a pseudo-range equation may be derived based on the conversion. As CPM positioning based on the pseudo-range equation, positioning based on GNSS/GPS may be performed by applying Equation 6 below.

[Equation 6]

$$\mathrm{p} = \rho + d_p + c(dt - dT) + d_{ion} + d_{trop} + e_{mp} + e_p$$

In Equation 6, p denotes pseudo-range measurement, $\rho$ denotes the true range, $d_p$ denotes satellite orbital errors, c denotes the speed of light, $dt$ denotes the satellite clock offset from GPS time, $dT$ denotes the receiver clock offset from GPS time, $d_{ion}$ denotes the ionospheric delay, $d_{trop}$ denotes the tropospheric delay, $e_{mp}$ denotes the multi-path effect, and $e_p$ denotes the receiver noise.

These terms may be considered in the GPS/GNSS, and there are techniques to mitigate or remove each term. Additionally, although it is not explicitly represented in Equation 6, the carrier phase information that the user may estimate is within a range of [0, $2\pi$]. For distances exceeding the range, a separate estimation method is needed. In other words, when the actual distance between the user and the satellite is converted into a phase, the receiver needs to estimate the distance corresponding to an integer multiple of the frequency cycle through a separate estimation method (integer ambiguity resolution).

**Differencing**

Positioning using CPM in the GNSS/GPS may also consider the following factors. Specifically, a cycle slip may occur at the receiver, which may require reporting or correction therefor. The cycle slip may occur when the receiver is incapable of tracking a signal beyond a specific threshold (e.g., a half-cycle). When such a cycle slip occurs, the measurement of the corresponding epoch from the transmitter may become invalid. After the cycle slip, measurements may be reused, but the integer ambiguity needs to be re-estimated.

Additionally, the issue of position dilution (dilution of precision) may also arise. The position dilution means that even when positioning is performed based on the same number of transmitters and receivers and with the same signal-to-noise ratio (SNR), the accuracy of the positioning may vary depending on the relative positions (or distances) between the transmitter and receiver, which is often referred to as geometric dilution of precision (GDOP). For example, when a receiver calculates the position based on signals from N transmitters, the positioning accuracy of the receiver may be lower if the transmitters are closely grouped, compared to when the transmitters are more evenly distributed.

**Integer Ambiguity Resolution**

First, the following may be considered as solutions related to integer ambiguity resolution (refer to Lee, Hongkyu (2014). "An Instantaneous Integer Ambiguity Resolution for GPS Real-Time Structure Monitoring," Journal of Korean Society of Civil Engineers, Vol. 34, No. 1, pp. 342-353 (in Korean)).

In dynamic positioning using GPS carriers, centimeter-level accuracy may be achieved through precise determination of unknown integer ambiguity contained in observation data. To this end, ambiguity resolution, which is a mathematical procedure for converting ambiguous range observation data with uncertainty into a precise range with millimeter-level accuracy, is necessary. For GPS dynamic positioning, it is common to apply the integer-constrained least squares (Teunissen, 1994; Han et al., 1997; Verhagen, 2004).

However, when the receiver is moving, there is a limitation on observation data capable of being used in the mathematical model compared to when the receiver is stationary, resulting in lower estimation precision and higher correlation, which makes it difficult to quickly and accurately resolve the integer ambiguity (Teunissen, 1993; Lee et al., 2005). Therefore, in GPS dynamic positioning, it is common to use the on-the-fly (OTF) method, which extracts and accumulates only the integer ambiguity part of a normal equation. The time required for initializing the integer ambiguity may range from several seconds to several minutes, depending on the satellite geometry and residual errors (Hofmann-Wellenhof et al., 2001). This method depends on the previously determined integer ambiguity after initialization as long as there are no signal interruptions (cycle slips). In this method, when initialization is required, it is not possible to perform high-precision positioning during the initialization period. Additionally, recalculation of the integer ambiguity is required due to changes in the satellite geometry, and continuous monitoring for signal interruptions is necessary, which makes the algorithm inherently complex.

In the mid-1990s, with the emergence of dual-frequency receivers capable of observing a precise pseudo-range, instantaneous ambiguity resolution has been developed for baselines of around 10 km (Han et al., 1996). This method independently resolves the integer ambiguity for each epoch whenever the GPS receiver acquires both the carrier phase and precise pseudo-range. Since the method does not require additional algorithms for checking the signal interruption or satellite geometry, the method is suitable for GPS structural monitoring environments where such interruptions frequently occur due to the structure or passing vehicles. However, the performance of the instantaneous ambiguity resolution is significantly affected by the satellite geometry and residual errors. Particularly, when fewer than five satellites are observed or when multi-path effects become significant, the performance thereof degrades (Lee et al., 2004).

There are a variety of algorithms for performing integer ambiguity resolution, and one of the most well-known and effective methods is least squares ambiguity decorrelation adjustment (LAMBDA). To use the LAMBDA, the float estimate of the position, i.e., the positioning within the cycle should be separated from the integer ambiguity. Since the integer ambiguity is an integer rather than a floating point value, the obtained float solution is not the exact solution and may be further refined. The ellipsoid formed by the covariance of the integer ambiguity becomes extremely elongated in one direction, and as a result, searching within this space is inefficient. Therefore, the LAMBDA transforms the system with the elongated ellipsoid to a system closer to a sphere, which is more efficient than previous methods in searching for solutions to the integer ambiguity.

Another method for estimating integer ambiguity involves using both CPM and code phase measurement at each epoch. The downside of this method is that a time slew value is required to obtain the correlation between the CPM and code phase measurement, and GPS outputs at 1 Hz from the Novatel Superstar II. A brief summary thereof is that the measurement for a single epoch and the covariance of the integer ambiguity from the previous epoch are used. The reason for using the covariance from the previous epoch is that when the receiver maintains phase lock on the carrier phase, the integer ambiguity remains constant across the two epochs. In addition, there are other algorithms for estimating integer ambiguity such as algorithms based on the extended Kalman filter, and there are many variations.

**Carrier phase measurement in NR**

The aforementioned CPM in the GPS/GNSS may be based on a single carrier. Specifically, in the CPM, the phase may be estimated based on the transmission and reception of sinusoidal signals, rather than in the code domain. The CPM between a satellite and user in the GPS/GNSS may be introduced to the gNB (or TRP) and UE in NR. In the introduction thereof to NR, there may be the following differences. Unless the sinusoidal signal is redefined as a reference signal, OFDM-based CPM should be performed. In other words, the OFDM-based CPM differs from GPS/GNSS-based CPM in that the OFDM-based CPM is performed on relatively wideband signals.

First, the current reference signal for positioning in NR is a PRS. If a sinusoidal signal is redefined based on the PRS, the sinusoidal signal may have the configuration characteristics of the PRS. That is, the bandwidth (BW) configuration for the sinusoidal signal may be more flexible. Additionally, the probability of having a LoS path between the BS (or TRP) and the user may be lower than the probability of having a LoS path between the satellite and the user. In other words, since the multi-path effects between the BS (or TRP) and the user are incapable of being ignored, the CPM in NR should also consider the effects of multi-path between the BS (or TRP) and the user. In the CPM in NR, non-line of sight (NLOS) elimination or LOS path estimation may be treated with greater importance from the perspective of algorithms. Additionally, compared to the GPS, NR typically has higher carrier frequencies, larger BWs, and stricter latency requirements. Consequently, in the CPM in NR, the time required to resolve integer ambiguity needs to be further reduced.

Solutions may be needed to address issues related to user positioning based on the CPM using the PRS in NR. Since the PRS is a reference signal with a BW, there should be a common understanding between the higher layers and the UE regarding which frequency within a given PRS is used for phase measurement. In contrast, existing NR positioning methods (e.g., OTDOA, AoA, AoD, etc.) do not require specifying or indicating specific frequency resources. However, in CPM-based positioning using the PRS, an additional operation of specifying or reporting a specific frequency may be required.

**Time domain window for multiple time measurement in carrier phase**

For user position estimation in a wireless access system, a scenario of estimating the position of a user based on carrier phase measurement (CPM) is considered. The CPM is a method of estimating the position of a user/UE by using the phase of a specific frequency (carrier) or estimating the distance between the user/UE and a BS based on the phase. The CPM may also be a method of estimating the position of a transmitting UE or a receiving UE by using the phase of a specific frequency or estimating the distance between a user/UE (transmitting UE) that transmits a reference signal and a user/UE (receiving UE) that receives the reference signal, based on the phase of the frequency.

When positioning of the UE is performed based on the phase-based position estimation method, the performance of CPM using a single time instance may be difficult to guarantee due to a low signal noise ratio (SNR) (or a channel effect). Therefore, the use of multiple time instances may enable the receiver to obtain a multiplexing gain (combining gain) and/or a diversity gain and to perform more accurate CPM. When these multiple time instances are used, a common understanding may be required between the transmitter and the receiver regarding how many multiple time instances are used for positioning. In addition, when positioning is performed based on the multiple time instances, a specific operation may be required for the transmitter and/or the receiver to obtain a performance gain from the positioning. Therefore, a method for indicating multiple time instances for CPM-based positioning and an operation of a transmitter/receiver according to the indication method will be described below in detail.

When a UE receives a PRS indicated by a location management function (LMF) or a gNB, the UE may perform CPM based on the PRS. In this case, a time domain window (TDW) may be indicated to the UE, along with an indication of CPM. The TDW for CPM may be configured/indicated for two purposes. Firstly, the TDW may be configured for differencing, such as single, double, or triple differencing. Secondly, since CPM is a positioning method for achieving high accuracy for UE position estimation, the TDW may be configured to combine multiple PRSs for SNR boosting. In the former case, since the purpose is differencing, the TDW needs to be configured to span at least a minimum required time length on the time axis. The minimum time length does not need to be set to a large value to minimize limitations on a reception operation of the UE. On the contrary, in the latter case, since the time-axis length of the TDW is directly related to a combining gain, the minimum time length of the TDW needs to be set longer than in the first case (although it may vary depending on a target requirement such as SNR boosting). The TDW may be configured together with or separately from an existing measurement gap (MG). Although the following description is given in the context of CPM, it may also be extended to other positioning techniques.

Further, existing NR positioning techniques may secure a reception SNR and/or measurement accuracy by using a multiplexing and/or diversity gain through support for positioning based on multiple time instances. Since CPM is positioning based on the phase of a carrier frequency, securing a reception SNR may be even more important for CPM than for the existing NR positioning techniques.

Further, DMRS bundling was introduced for UL coverage extension (refer to section 6.1.7 of 3GPP TS 38.214) in Rel-17 UL coverage enhancement. DMRS bundling is a method of allowing a UE to transmit PUSCHs or PUCCHs with phase continuity and power consistency guaranteed over multiple consecutive slots. In this case, the gNB (or receiver) may receive the PUSCHs or PUCCHs with guaranteed phase continuity and power consistency, and perform joint combining on the PUSCHs or PUCCHs, thereby improving the reception SNR gain of the PUSCHs or PUCCHs. The improvement of the reception SNR gain may extend the UL coverage of the UE.

In relation to Rel-17 DMRS bundling, to obtain a reception gain/performance through joint combining at the receiver, a common understanding may be important between the transmitter and the receiver regarding a time period during which an operation of maintaining phase continuity (and power consistency) at the transmitter is restricted, and a time period during which phase continuity (and power consistency) is maintained between the transmitter and receiver.

Therefore, for improved SNR performance and accurate measurement of the receiver in CPM, similar to DMRS bundling, the transmitter may perform transmission with guaranteed phase continuity (and power consistency) in multiple time instances, and the receiver may perform more accurate measurement through joint combining of signals in the multiple time instances with guaranteed phase continuity (and power consistency). In the case of DL PRS(PRS resource)-based CPM, if a PRS (hereinafter, referring to PRS resources) is not a PRS transmitted by a serving cell, the slot boundary of the receiver and the slot boundary of the transmitter (e.g., SCell) that transmitted the PRS may not be aligned due to a propagation delay. In this case, even if a time period for which PRS phase continuity is guaranteed is configured between the transmitter and the receiver, the UE as the receiver may have an actual available time period (for joint combining) different from the configured time period due to slot boundary misalignment.

Further, in the case of UL sounding reference signal (UL SRS)-based CPM, SRS resources for positioning (i.e., an SRS configured for the UE for positioning purposes, not MIMO purposes) are configured on a slot basis, and slot level repetition is not defined. Therefore, a separate additional definition/agreement may be required regarding an SRS configuration for positioning.

A detailed description will be given below of CPM based on multiple DL PRSs with guaranteed phase continuity and CPM based on multiple UL SRSs with guaranteed phase continuity. For convenience of description, phase continuity and power consistency will be collectively defined and described below as phase continuity.

## 1. CPM based on multiple DL PRS

As described above, a common understanding may be important between the transmitter and the receiver regarding a time period during which an operation of maintaining phase continuity at the transmitter (BS/gNB) is restricted, and a time period during which phase continuity (and power consistency) is maintained between the transmitter and receiver. First, in "CPM based on multiple DL PRS" using phase continuity, a common understanding of a time period during which phase continuity is maintained between the transmitter and the receiver may be required. To this end, the gNB (LMF) needs to indicate/configure to/for the UE a time period (i.e., a TDW for a PRS) during which the PRS is transmitted with its phase continuity guaranteed on DL. The TDW for the PRS may be referred to as TDW_PRS. In all alternatives below, the TDW_PRS may be configured simultaneously with the gNB (LMF) instructing the UE to perform CPM-based (position) measurement. Alternatively, upon request of the UE, a value of the TDW_PRS may be indicated to the UE. For example, the TDW_PRS may be configured in an assistance data transfer step in which the UE is instructed to perform CPM-based measurement and reporting. Alternatively, upon request of the UE after the gNB(LMF) instructs the UE to perform CPM-based measurement and reporting, the value of the TDW_PRS may be indicated to the UE.

As described above, the gNB (LMF) may indicate to the UE a PRS transmission time period (i.e., TDW_PRS) during which the phase continuity of the PRS is guaranteed, based on at least one of the following alternatives.

(1) Alt. 1

The time length and position (starting time resource/ending time resource) of a TDW_PRS may be directly indicated/configured to/for the UE by the gNB (LMF).

The gNB (LMF) may explicitly configure a TDW_PRS including a plurality of symbols, slots, and/or frames. The time length and position of the TDW_PRS may be a periodic or aperiodic configuration. The time length and position of a periodic TDW_PRS may be configured based on a periodicity, and the time length and position of an aperiodic TDW_PRS may be configured based on an SFN.

The TDW_PRS may be indicated/configured explicitly along with a PRS configuration by the gNB (LMF). In this case, the TDW_PRS may be indicated directly by a PRS configuration of a positioning frequency layer (PFL), a PRS configuration of a TRP, a PRS resource set configuration, or a PRS resource configuration, based on the configuration structure of the PRS configuration. The time length and position of the TDW may be configured/indicated based on the slot boundary of the transmitter, not the slot boundary of a reception slot of the UE.

Alternatively, the TDW_PRS may be indicated/configured through RRC/MAC-CE/DCI by the gNB, separately from the PRS configuration. In this case, the time length and position of the TDW may be configured/indicated based on the reception slot boundary of the UE as the receiver.

For a TDW_PRS explicitly indicated/configured in the above manner, the gNB/LMF may transmit PRS(s) with guaranteed phase continuity within the same TDW_PRS. The UE may expect to receive the PRS(s) transmitted with guaranteed phase continuity within the TDW_PRS.

(2) Alt. 2

The UE may derive/determine the time length and position of a TDW_PRS from other configured parameters without receiving a direct configuration/indication of the time period of the TDW_PRS from the gNB (LMF).

For example, the gNB (LMF) may indicate a transmission with guaranteed phase continuity to the UE, and the UE may derive a TDW_PRS in which a plurality of PRSs are expected to be transmitted with guaranteed phase continuity, from previous configured parameters. For example, when the gNB (LMF) indicates a transmission with guaranteed phase continuity for a specific PFL to the UE, the UE may expect that phase continuity will be guaranteed for all PRSs/PRS resources received in the PFL. Alternatively, the UE may expect/determine that phase continuity will be guaranteed only for PRSs/PRS resources received in consecutive slots among all PRSs/PRS resources received in the PFL. This is based on the assumption that phase continuity is not guaranteed for non-consecutive slots in the legacy DMRS bundling.

Alternatively, the gNB (LMF) may indicate to the UE information (a TDW_PRS) about a transmission with guaranteed phase continuity from a specific TRP by a TRP ID. In this case, the UE may expect/predict that phase continuity will be guaranteed for all PRSs transmitted from the specific TRP. Alternatively, the UE may determine/predict that phase continuity is guaranteed only for PRS resources in consecutive slots among all PRS resources received from the specific TRP. That is, the UE may derive the TDW_PRS based on the TRP ID of the specific TRP. For example, the UE may determine/consider a time period corresponding to a PRS resource set or PRS resources corresponding to the TRP ID of the specific TRP as the time period of the TDW_PRS.

Alternatively, the gNB (LMF) may indicate to the UE information (a TDW_PRS) about a transmission with guaranteed phase continuity in a specific PRS resource set by a PRS resource set ID. In this case, the UE may expect/determine that all PRS resources configured/included in the specific PRS resource set will be transmitted/received with guaranteed phase continuity. Alternatively, the UE may determine that phase continuity is guaranteed only for PRS resources received in consecutive slots among all PRS resources of the specific PRS resource set.

Alternatively, the gNB (LMF) may indicate to the UE information about a transmission with guaranteed phase continuity in at least one specific PRS resource included in a specific PRS resource set by a PRS resource ID. In this case, the UE may expect/determine that phase continuity will be guaranteed for the transmission in the at least one specific PRS resource. Alternatively, the UE may determine that phase continuity will be guaranteed only for PRS resources included in consecutive slots among the at least one specific PRS resource.

Based on the above-described methods, the gNB/LMF may always perform a transmission with guaranteed phase continuity on a per-TRP (or per-PFL/resource/resource set) basis. In this case, the UE may derive/determine a TDW_PRS from a time period corresponding to a TRP (or PFL/resource/resource set). The UE may expect/determine that PRS(s) received within the TDW_PRS derived from a configuration of the gNB/LMF are signals transmitted with guaranteed phase continuity.

Based on the above-described alternatives, the UE may configure/derive a TDW_PRS per implicitly and/or explicitly configured TRP (or PFL/resource/resource set). The UE may be configured with TDW_PRS(s) that may be aligned between different TRPs (or PFLs/resources/resource sets) under the control of the LMF. The above alternatives may be considered for extending one of the legacy NR positioning techniques, OTDOA to a phase-based positioning technique (or for performing differencing in CPM). When the length of a suitable window (or TDW_PRS) differs for each TRP, it is necessary to configure a window length (or the size of a TDW_PRS) for each TRP such that the window lengths have a minimum multiple relationship (e.g., 1, 2, $2^2$...) (information about the window length for each TRP (or PFL/resource/resource set).

As described above, the UE may determine/expect that a plurality of PRSs received in a TDW_PRS configured according to the alternatives (Alt. 1 and Alt. 2) have been transmitted with guaranteed phase continuity. That is, the UE may determine that the PRSs received within the single TDW_PRS are PRSs transmitted with guaranteed phase continuity by the gNB/LMF.

The UE may perform joint combining on all of the plurality of PRSs received within the configured TDW_PRS (i.e., a time period during which the plurality of PRSs with guaranteed phase continuity are received). However, the plurality of PRSs may be actually received from a cell or TRP other than a serving cell, or the TDW_PRS may not be configured only within a measurement gap. In the latter case, a signal/channel of the serving cell may be received or a signal transmission of the serving cell may be indicated in (a portion of) the TDW_PRS outside the measurement gap. That is, the UE may not be able to receive all of the PRSs configured within the configured TDW_PRS. In this case, even if the gNB/LMF performs a transmission with guaranteed phase continuity for all PRSs within the TDW_PRS, the UE (receiver) may obtain a phase continuity-based performance gain only from some of the PRSs.

Specific methods (options) in which a UE performs measurement and reporting for positioning, such as CPM, for a plurality of PRSs received within a TDW_PRS configured based on the above description will be described below in detail.

1) Option 1

The UE may perform measurements for a plurality of PRSs configured to be received within a TDW_PRS and perform a single measurement report. For example, the UE may report the measurements of the plurality of PRSs received within the TDW_PRS to the gNB by a single report.

Specifically, the UE may not receive all of the plurality of PRSs configured within the TDW_PRS due to a signal transmission/reception to/from the serving cell, or even if all of the plurality of PRSs are received, a reception performance gain (based on maintaining phase continuity at the transmitter) through joint combining at the UE as the receiver may not be significant. In this case, since it is not easy to separately report the measurement result of each of the plurality of PRSs (or it is difficult to indicate all such results in the measurements of the plurality of respective PRSs), the UE may perform a measurement report without separately reporting information such as the number of PRSs used for measurement within the TDW_PRS. That is, the UE may perform a single measurement report for the configured TDW_PRS. Therefore, the number of PRSs for which the UE performs measurements within the TDW_PRS or the presence or absence of a reception performance gain within the TDW_PRS through a specific operation of the receiver may all depend on UE implementation.

2) Option 2

In measurement reporting for a configured (or UE-derived) TDW_PRS, the UE may perform measurements for PRSs received in a time period equal to or shorter than the TDW_PRS, and perform a measurement report per unit corresponding to the time period during which the PRSs are received.

Specifically, when the gNB/LMF transmits N PRSs with guaranteed phase continuity within the TDW_PRS, the UE may be restricted from performing an operation related to signal transmission/reception or forced to perform a specific operation during a specific reception time (e.g., an M-slot duration) (hereinafter, TDW for reception (TDW_RECP)) equal to or shorter than the TDW_PRS, to obtain a reception performance gain from the N PRSs. That is, to obtain a joint combining gain, reception phase continuity should also be guaranteed during the TDW_RECP, and thus an operation that disrupts the reception phase continuity may be restricted. The operation that disrupts the reception phase continuity may be an event occurrence operation that disrupts maintenance of transmission phase continuity described in section 6.1.7 of TS 38.214. For example, the UE may be restricted from performing some or all of the following operations within the TDW_RECP.

- Other DL reception rather than configured PRS
- UL transmission
- TA adjustment
- Spatial filter for reception change
- Update of oscillator and/or automatic gain control (AGC)

That is, the UE may perform measurements for a plurality of PRSs only in the TDW_RECP period in which the reception performance gain may be obtained, and perform a measurement report per TDW_RECP period.

Specifically, the UE may have been instructed by the gNB/LMF to measure and report N PRSs within the TDW_PRS. In this case, the UE may perform measurements and reporting for a plurality of PRSs received per TDW_RECP, which is a part or the entire time period of the TDW_PRS. In the measurement report, the UE may explicitly report information about the TDW_RECP by also explicitly specifying a plurality of symbols, a plurality of slots, and/or the number of received PRSs corresponding to the TDW_RECP. That is, even when instructed to report a single measurement, the UE may report measurements in the form of a plurality of {TDW_RECP, measurement}. Alternatively, the UE may report a 1-bit indicator indicating whether the report is for a plurality of measurements in the TDW_RECP or for a measurement in a single time instance (along with the measurement report). For example, the UE may transmit a report in the form of {indicator, measurement}.

Alternatively, the UE may also report a measurement reliability or a phase confident level like a LOS indicator in a measurement result according to UE implementation, without directly reporting the TDW_RECP. That is, the UE may transmit a report in the form of {phase confident level, measurement}, and the phase confident level may be a value derived according to the UE implementation.

3) Option 3

In measurement reporting for a configured (or UE-derived) TDW_PRS, the UE may perform a measurement report for a specific number of PRSs satisfying a specific condition, if it is possible to measure the specific number of PRSs, whereas the UE may not perform a measurement report, if it is not possible to measure the specific number of PRSs satisfying the specific condition.

Specifically, only when the TDW_RECP described in Option 2 above is equal to the TDW_PRS, or when the TDW_RECP is applied for a specific number of PRSs greater than 1, the UE may perform measurement and reporting for the specific number of PRSs. Conversely, when the TDW_RECP is smaller (shorter) than the TDW_PRS, or when the TDW_RECP is applied for a specific number of PRSs less than or equal to 1, the UE may not perform a measurement report. That is, when it is possible to receive a specific number of PRSs with maintained phase continuity, the UE may perform a measurement report, and when it is not possible to receive the specific number of PRSs with maintained phase continuity, the UE may not perform a measurement report even if instructed to do so. In other words, the UE may perform a report in response to a measurement report indication, on the condition that a predetermined number or more of PRSs are received within the TDW_RECP.

## 2. CPM based on multiple UL SRS

As described in section 1, a common understanding of a time period during which phase continuity is maintained between the transmitter and the receiver, along with restrictions on a transmitter operation of maintaining phase continuity, may be important. Therefore, for CPM based on a plurality of UL SRSs with guaranteed phase continuity, the first consideration may be a common understanding of a time period during which phase continuity is maintained between the transmitter and the receiver. To this end, on UL, the UE as the transmitter needs to configure a PRS time period (i.e., a TDW for an SRS (TDW_SRS)) during which the UE as the transmitter transmits the SRS with guaranteed phase continuity, through an indication from the gNB/LMF. In all alternatives below, the TDW_SRS may be configured simultaneously with the gNB (LMF) instructing the UE to transmit the SRS. Hereinafter, a positioning SRS may refer to an SRS resource used for positioning purposes.

To this end, the gNB/LMF may indicate the TDW_SRS based on the capability of the UE. That is, the UE may report, as its capability for a positioning TDW, a maximum time during which it may maintain the phase continuity of the SRS, for CPM based on multiple UL SRSs, and the TDW_SRS may always be configured as a time period less than or equal to the maximum time reported as the capability for the positioning TDW. Therefore, when the UE receives a TDW_SRS configuration, it may perform an SRS transmission with guaranteed phase continuity only for a time period of min(TDW_SRS, capability for positioning TDW). The capability for the positioning TDW may be determined/reported based on at least one of the following options.

- Option 1

The capability for the positioning TDW may be identical to a maximum time period during which power consistency & phase continuity may be maintained, reported as a capability for DMRS bundling by the UE, or may be a time period that may be inferred/derived from the maximum time period. For example, a time period reported as a capability for legacy DMRS bundling is maxDMRS-BundlingDuration described in section 6.1.7 of 3GPP TS 38.214 ([maxDMRS-BundlingDuration] is maximum duration for a nominal TDW subject to UE capability [TS 38.306]).

- Option 2

A capability for a positioning TDW may be reported as separate UE capability information from a time period reported as a capability for DMRS bundling (i.e., maxDMRS-BundlingDuration). The capability for the positioning TDW may be reported as a separate value for the following reasons. For example, a TDW reported as the capability for DMRS bundling may be agreed/defined based on the phase continuity of the transmitter for gNB data reception. In contrast, a different criterion for phase continuity may be applied to positioning. Therefore, the capability for the positioning TDW needs to be reported as a separate value from maxDMRS-BundlingDuration.

- Option 3

The capability for the positioning TDW differs depending on a channel environment, such as UE mobility, and thus may change over time unlike legacy capability information. Therefore, the UE needs to periodically or aperiodically report the capability for the positioning TDW to the gNB/LMF, separately from the capability for DMRS bundling.

The gNB/LMF may indicate/configure a TDW_SRS to/for the UE based on the capability for the positioning TDW. The UE may determine that the smaller value between the indicated/configured TDW_SRS and the capability for the positioning TDW has been indicated as a TDW_SRS to be applied. In this case, the UE should transmit a plurality of positioning SRSs, while maintaining phase continuity within the TDW_SRS. However, since the legacy SRS configuration does not include a repetition configuration, at least one of the following methods needs to be considered.

**- Method 1**

Since repetition may not be configured for the positioning SRS, the UE may perform an SRS resource/SRS transmission with phase continuity maintained between different SRS resources within a configured TDW_SRS (limited only to the same time configuration (periodic/semi-persistent/aperiodic)).

For example, the UE may determine that transmission of SRS resources/SRSs with guaranteed phase continuity has been indicated for SRS resources that may be transmitted in consecutive time resources (slots) within the configured TDW_SRS. Alternatively, when the SRS configuration additionally includes a configuration for the TDW_SRS, the UE may determine that transmission of SRS resources/SRSs with guaranteed phase continuity has been indicated for SRS resources that may be transmitted in consecutive time resources (slots) within the configured TDW_SRS.

Alternatively, the UE may determine that it has been instructed to perform an SRS transmission with guaranteed phase continuity in SRS resources at positions (or occurrence positions) in N slots within the TDW_SRS.

**- Method 2**

Repetition may be newly introduced for the positioning SRS. In this case, the UE may repeatedly transmit the same SRS resource/SRS within the configured TDW_SRS.

In this case, the relationship between a repetition number/time period rep_SRS of the positioning SRS and a TDW_SRS may be as follows.

Firstly, when TDW_SRS > rep_SRS is configured (or when it is possible to repeatedly transmit the SRS a predetermined number of times within the TDW_SRS), the UE may perform SRS transmission/repeated SRS transmission with maintained/guaranteed phase continuity. Secondly, when TDW_SRS < rep_SRS is configured (or when it is not possible to repeatedly transmit the SRS a predetermined number of times within the TDW_SRS), the UE may perform SRS transmission/repeated SRS transmission with phase continuity maintained on a TDW_SRS basis. That is, the UE may repeatedly dispose/configure at least one TDW_SRS within a time period for performing rep_SRS, and perform SRS transmission/repeated SRS transmission with phase continuity maintained only within a single TDW_SRS.

Based on the above-described methods, the UE may determine that it has been instructed to perform SRS transmission with phase continuity maintained within the configured TDW_SRS. However, even for SRS transmission within the TDW_SRS, the UE may perform the SRS transmission in a situation where phase continuity is not maintained (due to an event defined in DMRS bundling). This is reasonable considering that all cases where the UE performs transmission without applying phase continuity are defined as events, based on a similar discussion, even though DMRS bundling is UL Tx to a serving cell. In particular, since a positioning SRS transmission is not protected (i.e., even if the UE is instructed to transmit the SRS for positioning purposes, the UE may perform transmission/reception with the serving cell in corresponding resources with priority, without performing the SRS transmission for positioning purposes), the SRS transmission with maintained phase continuity may not always be guaranteed. In this case, at least one of the following options may be considered.

**- Option 1**

After an SRS transmission, the UE may report, to the gNB/LMF, information about the time boundary of a period during which phase discontinuity occurs (i.e., phase continuity is not guaranteed) during the SRS transmission within a TDW_SRS.

Specifically, the UE may report information about the period related to phase discontinuity by the index of a symbol/slot or an SRS among SRS resources transmitted to the gNB/LMF. Alternatively, more simply, the UE may report to the gNB/LMF whether phase discontinuity occurred in the transmitted SRS resources by using a 1-bit indicator, thereby reporting to the gNB/LMF whether phase continuity is guaranteed in each TDW_SRS.

**- Option 2**

The UE always performs an SRS transmission with phase continuity guaranteed within a TDW_SRS, and upon occurrence of an event that prevents phase continuity from being maintained, the UE may not perform the SRS transmission after the event occurs (even if the TDW_SRS has not ended).

Specifically, the UE may be configured to transmit N SRSs in a plurality of slots within a TDW_SRS for positioning by the gNB/LMF. In this case, when phase discontinuity (i.e., an event) occurs after the transmission of an M(<N)-th SRS, the UE may discontinue the SRS transmission, starting from an (M+1)th-SRS.

In the above case, whether the event that disrupts the phase continuity of the positioning SRS of the UE has occurred may be determined/judged based on at least one of the following conditions.

-- When the SRS transmission is dropped due to transmission to the serving cell (due to a collision between SRS resources for positioning and a PUSCH).

-- When simultaneous SRS transmissions are performed in an SRS resource for positioning and an SRS resource for MIMO.

-- When the time resources of a plurality of SRS resources for positioning overlap, and thus simultaneous (SRS) transmissions are performed.

-- In other cases where the UE performs an operation that prevents it from maintaining phase continuity within a TDW for SRS positioning, such as when at least one of the events defined in the following Table 10 related to section 6.1.7 of TS 38.214 occurs (by replacing PUSCH and/or PUCCH with SRS in Table 10).

[Table 10]

| |
|---|
| - A downlink slot or downlink reception or downlink monitoring based on *tdd-UL-DL-ConfigurationCommon* and *tdd-UL-DL-ConfigurationDedicated* for unpaired spectrum. |
| - The gap between any two consecutive PUSCH transmissions, or the gap between any two consecutive PUCCH transmissions, exceeds 13 symbols for normal cyclic prefix or exceeds 11 symbols for extended cyclic prefix. |
| - The gap between any two consecutive PUSCH transmissions, or the gap between any two consecutive PUCCH transmissions, does not exceed 13 symbols but other uplink transmissions are scheduled between the two consecutive PUSCH transmissions or the two consecutive PUCCH transmissions. |
| - For PUSCH transmissions of PUSCH repetition type A, or PUSCH repetition type B or TB processing over multiple slots, a dropping or cancellation of a PUSCH transmission according to clause 9, clause 11.1 and clause 11.2A of [6, TS 38.213]. |
| - For PUCCH transmissions of PUCCH repetition, a dropping or cancellation of a PUCCH transmission according to clause 9, clause 9.2.6 and clause 11.1 of [6, TS 38.213]. |
| - For any two consecutive PUSCH transmissions of PUSCH repetition type A, or PUSCH repetition type B, and when two SRS resource sets are configured in *srs-ResourceSetToAddModList* or *srs-ResourceSetToAddModListDCI*-0-2 with higher layer parameter *usage* in *SRS-ResourceSet* set to 'codebook' or 'noncodebook', a different SRS resource set association is used for the two PUSCH transmissions of PUSCH repetition type A, or PUSCH repetition type B, according to Clause 6.1.2.1. |
| - For any two consecutive PUCCH transmissions of PUCCH repetition, and when a PUCCH resource used for repetitions of a PUCCH transmission by a UE includes first and second spatial relations or first and second sets of power control parameters, as described in [10, TS 38.321] and in clause 7.2.1 of [6, TS 38.213], different spatial relations or different power control parameters are used for the two PUCCH transmissions of PUCCH repetition, according to Clause 9.2.6 of [6, TS 38.213]. |
| - Uplink timing adjustment in response to a timing advance command according to clause 4.2 of [6, TS 38.213]. |
| - Frequency hopping. |
| - For reduced capability half-duplex UEs, |
| -- a dropping or cancellation of a PUSCH transmission according to clause 17.2 of [6, TS 38.213], or an overlapping of the gap between two consecutive PUSCH transmissions and any symbol of downlink reception or downlink monitoring. |

A TDW period during which phase continuity is maintained as described above may be applied not only to SRS/PRS-based positioning but also to ISAC described with reference to FIG. 13. That is, the TDW period may also be applied to transmission of a communication signal for sensing (by a radar). In this case, the transmitter may transmit communication signals for sensing, while maintaining phase continuity within the configured TDW. For example, the transmitter may be configured with a TDW in the manner described in sections 1 and 2 above. In this case, the transmitter may repeatedly transmit communication signals while maintaining phase continuity within the TDW to detect and track an object, collect information for monitoring a surrounding environment, or monitor the movement of an object. Through this, the transmitter may greatly improve the accuracy of a sensing operation based on signals reflected from an object (based on improvement of a reception SNR gain by performing joint combining based on maintaining phase continuity).

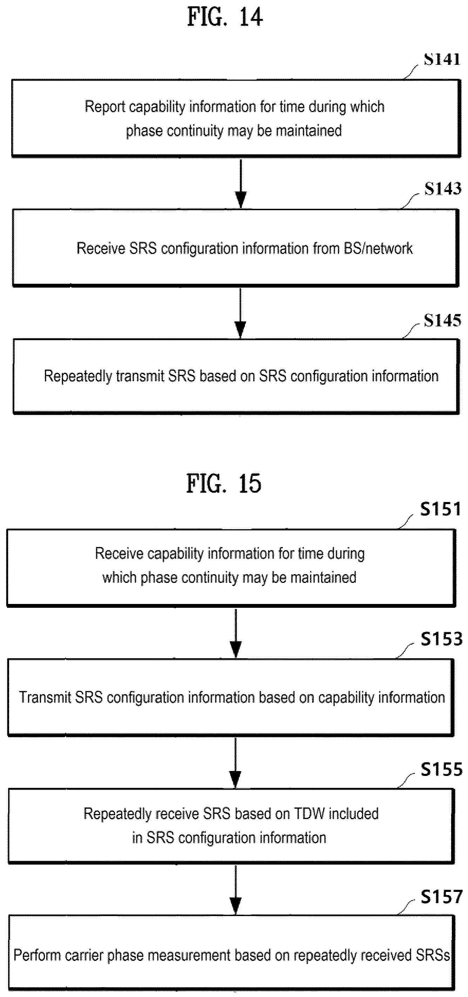

FIG. 14 is a diagram illustrating a method for transmitting an SRS related to positioning by a UE.

Referring to FIG. 14, the UE may report to a BS/network capability information for a (maximum) time during which phase continuity may be maintained, for transmitting a signal such as an SRS (S141). As described in Option 1 of section 2, the UE may report capability information for a maximum time period for maintaining power consistency & phase continuity in DMRS bundling, or separately report a maximum time period during which power consistency & phase continuity may be maintained for positioning such as CPM, as described in Option 2. Alternatively, as in Option 3 of section 2, a maximum time period during which power consistency & phase continuity may be maintained may change depending on a channel environment due to UE mobility, and the UE may periodically or aperiodically report the capability information for the maximum time period to the BS/network according to a current channel environment. For example, when a channel state degrades below a specific channel state after reporting the capability information, the UE may report capability information in the current channel state to the BS/network based on the degraded channel state below the specific channel state. Alternatively, when the movement speed of the UE increases to or above a specific movement speed after reporting the capability information, the UE may report capability information corresponding to the current movement speed to the BS/network based on the movement speed of the UE equal to or greater than the specific movement speed.

The UE may then receive SRS configuration information from the BS/network (S143). The SRS configuration information (SRS-Config IE; refer to TS38.331) may include configuration information (an RS resource set ID or an RS resource ID) for SRS resources, as described with reference to FIG. 6.

When the SRS configuration information is for configuring an SRS for calculating the position of the UE based on CPM, the SRS configuration information may further include information about a TDW having a size determined based on the capability information. The information about the TDW may include information about a starting point/slot boundary and the size, as described in Alt. 1 and/or Alt. 2 of section 1. The size of the TDW may be set to be equal to or smaller than a maximum time related to DMRS bundling or a maximum time separately reported in relation to positioning, based on the capability information described above.

Thereafter, the UE may transmit the SRS based on the SRS configuration information (S145).

Specifically, the UE may receive SRS configuration information for multiple input multiple output (MIMO), beam direction configuration, UL channel state measurement, and/or positioning. In particular, when the SRS configuration information is for positioning, the UE may receive the SRS configuration information that further includes the information about the TDW described above. In this case, the UE may determine, based on the SRS configuration information that further includes the information about the TDW, that the received SRS configuration information is configured/received for an SRS transmission for positioning. The UE may repeatedly transmit the SRS based on the SRS configuration information, while maintaining phase continuity within the TDW. That is, based on the SRS configuration information further including the information about the TDW related to positioning, the UE may repeatedly transmit the SRS, while maintaining phase continuity within the TDW. The repeatedly transmitted SRSs may be generated based on the same basic sequence.

For example, the UE may determine SRS resources located within the TDW from among a plurality of SRS resources (a plurality of SRS resources specified by an SRS resource ID or an SRS resource set ID) indicated by the SRS configuration information, and repeatedly transmit the SRS in each of the SRS resources. Alternatively, the UE may determine a repetition number for the SRS based on the number of consecutive SRS resources in the time domain among the SRS resources. For example, the UE may determine the plurality of SRS resources and the position and size of the TDW based on the SRS configuration information. The UE may determine the SRS resources located within the TDW from among the plurality of SRS resources, and determine the number of consecutive SRS resources in the time domain among the SRS resources. The UE may repeatedly transmit the SRS as many times as the number of consecutive SRS resources in the time domain. Alternatively, the UE may repeatedly transmit the SRS within the TDW by considering Method 1 or Method 2 of section 2 described above.

Alternatively, the SRS configuration information may further include information about the repetition number of the SRS within the TDW. Alternatively, when the TDW is configured to have a size longer than a maximum time during which phase continuity may be maintained, included in the capability information, the UE may repeatedly transmit the SRS while maintaining phase continuity only for the maximum time of the capability information, not the size of the TDW. Meanwhile, when phase discontinuity occurs during the repeated SRS transmission within the TDW, the UE may stop the repeated SRS transmission even if the time period of the TDW remains. The phase discontinuity may be caused by the events defined in Option 1, Option 2, and Table 10 of section 2 described above. In this case, the UE may report information about a time boundary/time period/SRS resource ID in which the phase discontinuity occurred, to the BS/network, or may report information about the occurrence of phase discontinuity to the BS/network through an indicator (e.g., 1 bit) for phase discontinuity.

In this case, the BS/network may receive the SRSs repeatedly transmitted within the TDW by the UE, and measure/estimate the position of the UE based on measured phases/phase differences of the SRSs (CPM). Since phase continuity is guaranteed for the SRSs received within the TDW, the BS/network may perform joint combining on the SRSs received within the TDW to improve SNR performance, then calculate/measure the phases of the SRSs, and perform differencing to calculate the differences between the phases of the SRSs received within the TDW.

FIG. 15 is a diagram illustrating a method for receiving an SRS related to positioning by a BS/network.

Referring to FIG. 15, the BS/network may receive a report of capability information for a (maximum) time during which phase continuity may be maintained for a transmission of a signal such as an SRS from a UE (S151).

The BS/network may then transmit SRS configuration information to the UE (S153). The SRS configuration information (SRS-Config IE; refer to TS38.331) may include configuration information (an RS resource set ID or an RS resource ID) for SRS resources, as described with reference to FIG. 6. When the SRS configuration information is for configuring an SRS to calculate the position of the UE based on CPM, the SRS configuration information may further include information about a TDW having a size determined based on the capability information. The information about the TDW may include information about a starting point/slot boundary and the size, as described in Alt. 1 and/or Alt. 2 of section 1. The size of the TDW may be set to be equal to or smaller than a maximum time related to DMRS bundling or a maximum time separately reported in relation to positioning, based on the capability information described above.

Thereafter, the BS/network may receive repeatedly transmitted SRS(s) based on the SRS configuration information and the TDW (S155). For example, when the SRS configuration information is for positioning, the BS/network may transmit to the UE the SRS configuration information that further includes information for configuring/indicating a TDW of a size determined based on the capability information. In this case, the BS/network may expect/predict that the UE will repeatedly transmit the SRS based on the SRS configuration information while maintaining phase continuity within the TDW. That is, based on the SRS configuration information further including the information about the TDW related to positioning, the BS/network may expect/predict that the UE will repeatedly transmit the SRS while maintaining phase continuity within the TDW. The repeatedly transmitted SRSs may be generated based on the same basic sequence.

Alternatively, the BS/network may indicate a plurality of SRS resources (a plurality of SRS resources specified by an SRS resource ID or an SRS resource set ID) for an SRS transmission by the SRS configuration information. The BS/network may repeatedly receive the SRS in SRS (time) resources located within the TDW from among the plurality of SRS resources. The BS/network may directly indicate a repetition number for the SRS to the UE by the SRS configuration information, or may expect/predict that the SRS will be repeatedly received as many times as the number of consecutive SRS resources in the time domain among the SRS resources within the TDW. The BS/network may repeatedly receive the SRS while maintaining phase continuity within the TDW.

Alternatively, the BS/network may repeatedly receive the SRS only during a time period shorter than the time period of the TDW. For example, when the TDW is configured to have a size longer than a maximum time during which phase continuity may be maintained, included in the capability information, the BS/network may receive the SRS transmitted with phase continuity maintained only during the maximum time included in the capability information. Alternatively, the BS/network may predict/expect that when phase discontinuity occurs at the UE during the repeated SRS transmission within the TDW, the repeated SRS transmission will be stopped.

Thereafter, the BS/network may calculate/measure phases or phase differences based on the repeatedly received SRSs, and measure/calculate the position of the UE based on the calculated/measured carrier phases (S157).

As such, the proposed disclosure may effectively configure a TDW during which phase continuity is guaranteed through a report of a capability for a time period during which phase continuity may be maintained. Alternatively, the proposed disclosure may greatly improve positioning accuracy based on a signal while enhancing the reception SNR performance of the receiver by guaranteeing a signal transmission with maintained phase continuity within the TDW. Alternatively, the proposed disclosure may effectively share the TDW, which is a time period during which phase continuity is guaranteed, between a receiver and a transmitter by clearly defining the TDW, which is a time period during which phase continuity is guaranteed, between the transmitter and receiver.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

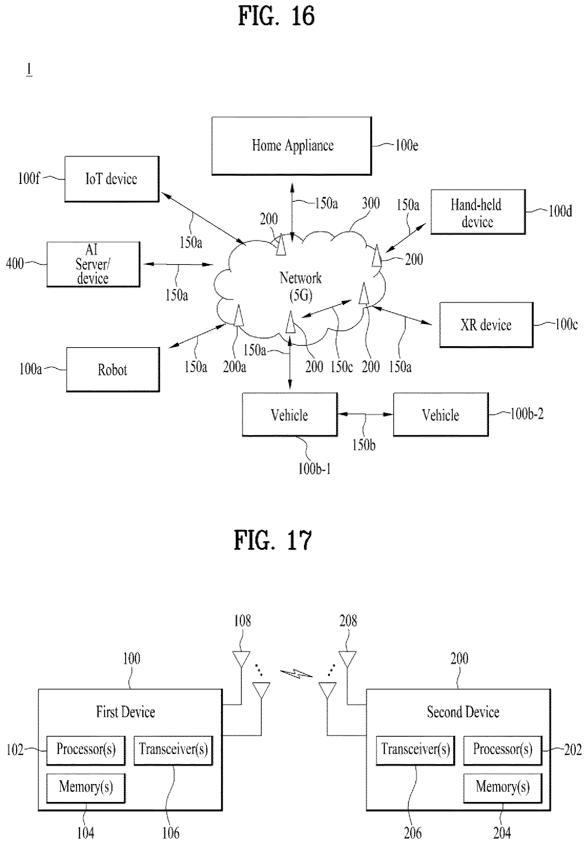

FIG. 16 illustrates a communication system applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 17 illustrates a wireless device applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

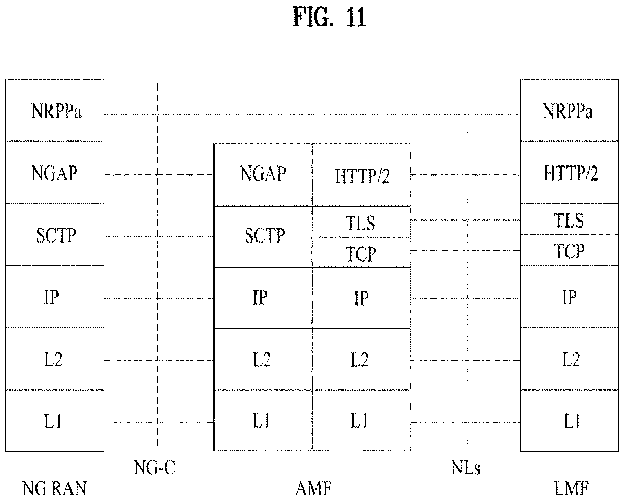

According to an embodiment, the first wireless device 100 or the UE may include the processor 102 connected to the RF transceiver, and the memory 104. The memory 104 may include at least one program for performing an operation related to the embodiments described with reference to FIGS. 10 to 15.

Specifically, the processor 102 may control the RF transceiver 106 to receive SRS configuration information, and repeatedly transmit the SRS while maintaining phase continuity within a TDW, based on the SRS configuration information including information about the TDW for positioning of the UE.

Alternatively, it may be a processing device for controlling the UE, including the processor 102 and the memory 104. In this case, the processing device includes the at least one processor 102 and at least one memory connected to the at least one processor 102 and storing instructions which based on being executed by the at least one processor, cause the UE to receive SRS configuration information, and based on the SRS configuration information including information about a TDW for positioning of the UE, repeatedly transmit the SRS while maintaining phase continuity within the TDW.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS or network may include the processor 202, the memory 204, and/or the transceiver 206. The processor 202 may control the transceiver 206 or RF transceiver to transmit SRS configuration information to the UE and to receive an SRS from the UE based on the SRS configuration information, measure the position of the UE using a carrier phase calculated based on the received SRS, and based on the SRS configuration information including information about a TDW for positioning of the UE, repeatedly receive the SRS while maintaining phase continuity within the TDW.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present invention is applied

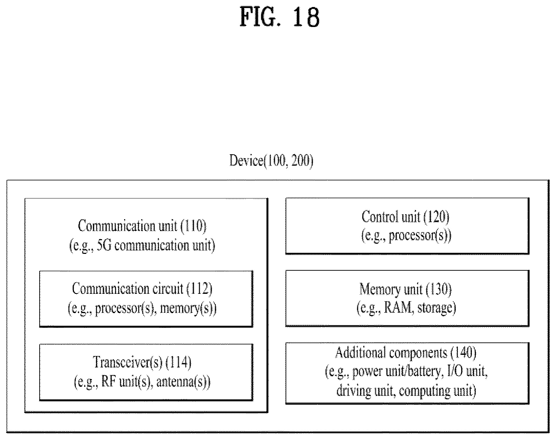

FIG. 18 illustrates another example of a wireless device applied to the present disclosure.

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**INDUSTRIAL APPLICABILITY**

The above-described embodiments of the present disclosure are applicable to various mobile communication systems.

**Claims**

1. A method for performing a positioning operation by a user equipment (UE) in a wireless communication system, the method comprising:

   receiving sounding reference signal (SRS) configuration information; and
   transmitting an SRS based on the SRS configuration information,
   wherein based on the SRS configuration information including information about a time domain window (TDW) for positioning of the UE, the UE repeatedly transmits the SRS, while maintaining phase continuity within the TDW.

2. The method of claim 1, wherein the SRS configuration information includes information about a plurality of time resources included in the TDW, and
wherein a repetition number for the SRS is determined based on the number of consecutive time resources in a time domain among the plurality of time resources.

3. The method of claim 1, wherein the SRS configuration information further includes information about a repetition number for the SRS.

4. The method of claim 1, wherein a size of the TDW is set based on capability information related to demodulation reference signal (DMRS) bundling, reported by the UE.

5. The method of claim 1, further comprising reporting capability information for a maximum time during which the UE is capable of maintaining phase continuity,
wherein a size of the TDW is set to be less than or equal to the maximum time included in the capability information.

6. The method of claim 5, wherein the capability information is reported aperiodically based on mobility of the UE being changed.

7. The method of claim 5, wherein based on the size of the TDW being greater than the maximum time, the UE repeatedly transmits the SRS while maintaining phase continuity only during a time period corresponding to the maximum time.

8. The method of claim 1, wherein the UE stops the repeated transmission of the SRS based on occurrence of phase discontinuity within the TDW.

9. The method of claim 1, wherein the SRS is repeatedly transmitted within the TDW, for positioning of the UE through carrier phase measurement (CPM).

10. A computer-readable recording medium having a program for performing the method of claim 1 recorded thereon.

11. A user equipment (UE) for performing a positioning operation in a wireless communication system, the UE comprising:

a radio frequency (RF) transceiver; and
a processor connected to the RF transceiver,
wherein the processor controls the RF transceiver to receive sounding reference signal (SRS) configuration information, and based on the SRS configuration information including information about a time domain window (TDW) for positioning of the UE, repeatedly transmit the SRS, while maintaining phase continuity within the TDW.

12. A processing device for controlling a user equipment (UE) that performs a positioning operation in a wireless communication system, the processing device comprising:

at least one processor; and
at least one memory connected to the at least one processor and storing instructions which, when executed by the at least one processor, cause the UE to:

receive sounding reference signal (SRS) configuration information; and
based on the SRS configuration information including information about a time domain window (TDW) for positioning of the UE, repeatedly transmit the SRS, while maintaining phase continuity within the TDW.

13. A method for performing an operation for positioning of a user equipment (UE) by a base station (BS) in a wireless communication system, the method comprising:

transmitting sounding reference signal (SRS) configuration information to the UE;
receiving an SRS from the UE based on the SRS configuration information; and
positioning the UE by using a carrier phase calculated based on the received SRS,
wherein based on the SRS configuration information including information about a time domain window (TDW) for positioning of the UE, the BS repeatedly receives the SRS, while maintaining phase continuity within the TDW.

14. A non-transitory computer-readable storage medium having instructions for performing the method of claim 13 recorded thereon.

15. A base station (BS) for configuring a beam for an access link of a device in a wireless communication system, the BS comprising:

a radio frequency (RF) transceiver; and
a processor connected to the RF transceiver,
wherein the processor controls the RF transceiver to transmit sounding reference signal (SRS) configuration information to the UE and repeatedly receive the SRS from the UE, while maintaining phase continuity within the TDW, based on the SRS configuration information including information about a time domain window (TDW) for positioning of the UE, and positions the UE by using a carrier phase calculated based on the received SRS.

## FIG. 1

# FIG. 2

# FIG. 3

... One Frame (10ms) ...

... Half-Frame (5ms) | Half-Frame (5ms) ...

... Subframe 0 (1ms) ... Subframe 4 (1ms) | Subframe 5 (1ms) ... Subframe 9 (1ms) ...

Subframe (1ms)

15KHz | Slot 0 (14symbols)
1ms

30KHz | Slot 0 (14symbols) | Slot 1
500us

60KHz | Slot 0 (14symbols) | Slot 1 | Slot 2 | Slot 3
250us

120KHz | Slot 0 (14symbols) | Slot 1 | Slot 2 | Slot 3 | Slot 4 | Slot 5 | Slot 6 | Slot 7
125us

# FIG. 4

Resource grid

A carrier
( up to 3300 subcarriers, i.e., 275 RBs )

A BWP

1 RB = 12 subcarriers

1 RE

1 subcarrier

1 symbol

k = 0

l = 0 ...

# FIG. 5

System Information

Initial Cell Search | Reception | Random Access Procedure | General DL/UL Tx/Rx
S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11 | S12 | S13 | S14 | S15 | S16 | S17

• DL/UL ACK/NACK
• UE CQI/PMI/Rank Report using PUSCH and PUCCH

EP 4 668 920 A1

# FIG. 6

```
     ┌─────────┐                                          ┌─────────┐
     │   UE    │                                          │   BS    │
     └─────────┘                                          └─────────┘
          │                    SRS Config. IE                  │
          │◄──────── (usage=BM, SRS-SpatialRelation Info) ─────│     S1010
          │                                                    │
  ┌───────────────────┐                                        │
  │Determination of TX beam│     S1020                         │
  │  for SRS resources │                                       │
  └───────────────────┘                                        │
          │       Transmit SRS through a determined Tx beam    │
          │───────────────────────────────────────────────────►│    S1030
          │                                                    │
          │                     feedback                       │
          │◄- - - - - - - - - - - - - - - - - - - - - - - - - -│     S1040
          │                                                    │
```

# FIG. 7

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

FIG. 8

## FIG. 9

UE | NG-RAN | AMF | LMF | 5GC LCS Entities

1a. Location Service Request

1b. Location Service Request

2. Location Services Request

3a. NG-RAN Procedures

3b. UE Procedures

4. Location Services Response

5a. Location Services Response

5b. Location Service Response

EP 4 668 920 A1

FIG. 10

## FIG. 11

| NRPPa | | | | | |
|---|---|---|---|---|---|
| HTTP/2 | | | | | |
| TLS | TCP | | | | |
| IP | | | | | |
| L2 | | | | | |
| L1 | | | | | |

LMF

NLs

| HTTP/2 | NGAP |
|---|---|
| TLS | TCP | SCTP |
| IP | IP |
| L2 | L2 |
| L1 | L1 |

AMF

NG-C

| NRPPa |
|---|
| NGAP |
| SCTP |
| IP |
| L2 |
| L1 |

NG RAN

FIG. 12

# FIG. 13

(1) gNB mono-static

(2) gNB bi-static

(3) gNB-to-UE bi-static

(4) UE mono-static

(5) UE bi-static

(6) UE-to-gNB bi-static

EP 4 668 920 A1

# FIG. 14

**S141**

Report capability information for time during which phase continuity may be maintained

**S143**

Receive SRS configuration information from BS/network

**S145**

Repeatedly transmit SRS based on SRS configuration information

# FIG. 15

**S151**

Receive capability information for time during which phase continuity may be maintained

**S153**

Transmit SRS configuration information based on capability information

**S155**

Repeatedly receive SRS based on TDW included in SRS configuration information

**S157**

Perform carrier phase measurement based on repeatedly received SRSs

# FIG. 16

# FIG. 17

# FIG. 18

Device(100, 200)

| | |
|---|---|
| **Communication unit (110)**<br>(e.g., 5G communication unit) | **Control unit (120)**<br>(e.g., processor(s)) |
| **Communication circuit (112)**<br>(e.g., processor(s), memory(s)) | **Memory unit (130)**<br>(e.g., RAM, storage) |
| **Transceiver(s) (114)**<br>(e.g., RF unit(s), antenna(s)) | **Additional components (140)**<br>(e.g., power unit/battery, I/O unit,<br>driving unit, computing unit) |

EP 4 668 920 A1

## INTERNATIONAL SEARCH REPORT

International application No.

**PCT/KR2024/002146**

| A. | CLASSIFICATION OF SUBJECT MATTER |
|---|---|

**H04W 64/00**(2009.01)i; **H04W 24/08**(2009.01)i; **G01S 19/43**(2010.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 64/00(2009.01); H04L 1/08(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위치 측정(position measurement), SRS(sounding reference signal), 시간 도메인 윈도우(time domain window, TDW), 위상(phase), 연속성(continuity), 반복 전송(repeat transmission), 시간 자원(time resource), 능력 정보(capability information)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022-080817 A1 (LG ELECTRONICS INC.) 21 April 2022 (2022-04-21)<br>See paragraphs [0290]-[0299] and [0417]; and claims 1-5. | 1-15 |
| Y | WO 2022-031919 A1 (IDAC HOLDINGS, INC.) 10 February 2022 (2022-02-10)<br>See paragraphs [0088]-[0089], [0107]-[0115], [0156]-[0159], [0252], [0317]-[0318] and [0324]. | 1-15 |
| Y | MCC SUPPORT. Final Report of 3GPP TSG RAN WG1 #110bis-e v1.0.0. R1-2210801, 3GPP TSG RAN WG1 Meeting #111. Toulouse, France. 10 November 2022.<br>See page 136. | 9,13-15 |
| A | PANASONIC. Discussion on joint channel estimation for PUSCH and PUCCH. R1-2206862, 3GPP TSG RAN WG1 #110. Toulouse, France. 12 August 2022.<br>See pages 2-3. | 1-15 |
| A | WO 2022-153222 A1 (LENOVO (SINGAPORE) PTE. LTD.) 21 July 2022 (2022-07-21)<br>See paragraphs [0004]-[0007]; and claims 1-12. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2024** | **31 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/002146**

| Patent document cited in search report | | | Publication date (day/month/year) | Patent family member(s) | | | Publication date (day/month/year) |
|---|---|---|---|---|---|---|---|
| WO | 2022-080817 | A1 | 21 April 2022 | EP | 4228191 | A1 | 16 August 2023 |
| | | | | KR | 10-2023-0084477 | A | 13 June 2023 |
| WO | 2022-031919 | A1 | 10 February 2022 | BR | 112023002072 | A2 | 02 May 2023 |
| | | | | CN | 116057875 | A | 02 May 2023 |
| | | | | EP | 4193549 | A1 | 14 June 2023 |
| | | | | KR | 10-2023-0045062 | A | 04 April 2023 |
| | | | | WO | 2022-031919 | A8 | 01 December 2022 |
| WO | 2022-153222 | A1 | 21 July 2022 | CN | 116803044 | A | 22 September 2023 |
| | | | | EP | 4252382 | A1 | 04 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE, HONGKYU**. An Instantaneous Integer Ambiguity Resolution for GPS Real-Time Structure Monitoring. *Journal of Korean Society of Civil Engineers*, 2014, vol. 34 (1), 342-353